# DEMANDE DE BREVET EUROPEEN

(11) **EP 0 899 272 A1**
(43) Date de publication de la demande: **03.03.1999**
(21) Numéro de dépôt: 98402076.8
(22) Date de dépôt: 18.08.1998
(51) Int. Cl.: C08B 37/16, C07B 57/00, B01J 20/00

(54) **Mono et di-dérivés de cyclodextrines, leurs syhthèse et purification et leur utilisation en support**

(30) Priorité: 29.08.1997 FR 9710817
(71) Demandeur: INSTITUT FRANCAIS DU PETROLE, 92500 Rueil Malmaison (FR); Chiralsep Sàrl, 76170 La Frenaye (FR)
(72) Inventeur: Duval, Raphael, 76330 Notre Dame De Gravenchon (FR); Lévèque, Hubert, 76170 Lillebonne (FR)
(74) Mandataire: Andreeff, François

(57) **Abrégé**

On décrit des mono- et des di-dérivés de cyclodextrines parfaitement définis, une méthode pour leur synthèse et leur purification, des cyclodextrines fonctionnalisées obtenues à partir de ces dérivés, ainsi que la synthèse de supports comportant ces dérivés de cyclodextrines. On décrit également l'utilisation desdits supports en préparation ou séparation d'énantiomères, ou en synthèse asymétrique, ou en catalyse ou en préparation ou séparation d'isomères géométriques ou d'isomères de position, ou en préparation ou séparation de molécules organiques à caractère hydrophobe.

## Description

L'invention concerne une méthode qui comprend la synthèse et la purification de mono et de di-dérivés de cyclodextrines (en abrégé CD), ainsi que la synthèse de supports à partir de ces dérivés de cyclodextrines. Ces nouveaux supports comportent un ou deux bras espaceurs liés régiosélectivement en position 2, 3 ou 6 d'une unité glucosidique de cyclodextrine.

L'invention concerne également l'utilisation desdits supports en préparation ou en séparation d'énantiomères ou en synthèse asymétrique, ou en catalyse, ou en préparation ou séparation d'isomères géométriques ou d'isomères de position, ou en préparation ou séparation de molécules organiques à caractère hydrophobe.

L'invention concerne aussi une méthode qui comprend la synthèse de polymères obtenus à partir des mono et di-dérivés de cyclodextrines, ainsi que la synthèse de supports à partir de ces polymères de cyclodextrines.

L'invention concerne également l'utilisation desdits supports en préparation ou en séparation d'énantiomères, ou en synthèse asymétrique, ou en catalyse, ou en préparation ou en séparation d'isomères géométriques ou d'isomères de position, ou en préparation ou séparation de molécules organiques à caractère hydrophobe.

La séparation de molécules organiques grâce aux propriétés d'encapsulation de cyclodextrines est utilisée depuis de très nombreuses années. Voir en particulier M.L. Bender : "Cyclodextrin Chemistry" - Springer Verlag - New-York 1978; R.J.Clarke: "Advanced Carbohydrates Chemistry and Biochemistry", 1988, 46, 205 ; W. Saenger : ANGEW. CHEM. - Int. Edit., 1980, 19, 344 ; G. Wenz : ANGEW. CHEM. - Int. Edit., 1996, 33, 803. Ces propriétés sont aujourd'hui très largement utilisées à l'échelon industriel dans les industries des parfums et arômes et de la pharmacie. Voir en particulier J. Szejtli : MED. CHEM. REV. 1994, 14, 353, et D. Duchêne : J. COORD. CHEM., 1992, 27, 223.

L'utilisation de cyclodextrines liées à des supports a permis de mettre en évidence leur capacité à séparer et préparer des molécules organiques mais également des isomères de position (voir en particulier Y. Kawaguchi : ANAL. CHEM. 1983, 55, 1852-1857, et K. Fujimura : ANAL. CHEM. 1983, 55, 446-450), ou des isomères géométriques (isomérie E/Z) - (voir en particulier Y. Inoue : J. AM. CHEM. SOC. 1995, 117, 11033-11034).

Plus récemment, ces même supports ont été utilisés pour la séparation ou la préparation d'énantiomères (voir en particulier K.Takahaschi : J. INCL. PHENOM., 1994, 17, 1) ou de molécules diverses par catalyse (voir en particulier G.Wenz: ANGEW. CHEM. - Int. Edit., 1996, 33, 803). Ce domaine est en expansion depuis une vingtaine d'années, tant au niveau analytique que préparatif. Ceci est vrai en particulier en pharmacie, où les autorités de Santé des pays industrialisés imposent l'étude séparée des isomères optiques de tout composé chiral entrant dans la composition d'un médicament.

Les cyclodextrines natives ou dérivées ont fait l'objet de nombreuses études et des cyclodextrines liées ou non à des supports sont commercialisées.

Actuellement, les supports à base de dérivés de cyclodextrines ou à base de polymères issus desdits dérivés ne sont pas chimiquement définis et se présentent sous forme de mélanges de mono et de polydérivés. En effet, les cyclodextrines comportent un grand nombre de fonctions hydroxyles, de réactivité quasiment équivalente, et il n'existe pas, à ce jour, de dérivés de CD chimiquement et régiosélectivement définis, produits à l'échelon industriel.

La présente invention permet d'accéder à des mono et des di-dérivés de cyclodextrines purs et régiosélectivement définis quant à la position de la dérivation sur l'unité glucosidique : position 2, 3 ou 6.

Lesdits dérivés peuvent être greffés, par un lien covalent hydrocarboné portant une fonction thioéther, sur une matrice minérale ou organique. L'ensemble constitue un support présentant une sélectivité accrue par rapport aux supports déjà connus pour des applications en :
- séparation ou préparation de molécules organiques à caractère hydrophobe;
- séparation ou préparation d'isomères de position ou d'isomères géométriques;
- séparation ou préparation d'énantiomères; ou
- synthèse asymétrique de molécules chirales.

La sélectivité accrue de ces supports est un facteur important pour leur mise en oeuvre à l'échelon laboratoire, pilote ou industriel, car elle permet une diminution des coûts de production.

Les supports selon l'invention, complètement originaux, permettent d'atteindre des performances chromatographiques inconnues jusqu'alors, en particulier dans le domaine de la discrimination d'énantiomères par chromatographie liquide, les sélectivités obtenues s'avérant supérieures à celles rencontrées couramment sur les colonnes chirales commerciales à base de cyclodextrines.

Plusieurs paramètres concourent à l'obtention de ce résultat inattendu :
- La régiosélectivité de la liaison entre l'unité glucosidique de la cyclodextrine et le bras espaceur reliant au support organique ou minéral. La technique de synthèse et de purification du mono-dérivé de cyclodextrine permet d'accéder aux dérivés pratiquement purs, liés en position 2, 3 ou 6 de l'unité glucosidique de la cyclodextrine.
- La synthèse du support à l'aide d'un seul bras espaceur entre le mono-dérivé de cyclodextrine de très grande pureté et le gel de silice fonctionnalisé.
- La présence d'un site d'interaction supplémentaire constitué par la fonction thioéther, sulfoxyde ou sulfone sur le bras espaceur, permettant la création de liaisons de type Van Der Waals avec le soluté, celui-ci étant d'autre part engagé dans d'autres interactions avec la cyclodextrine.

La combinaison de ces interactions conduit aux supports selon l'invention, qui présentent un pouvoir discriminant supérieur par rapport à ceux décrits dans l'art antérieur.

L'état antérieur de la technique est notamment représenté par la demande de brevet EP-A-608 703 et le brevet US-A-4 539 399, qui décrivent des supports chromatographiques à base de cyclodextrines. Ces supports ne sont pas définis chimiquement car leur méthode de synthèse conduit à des mélanges indifférenciés de mono et poly-substitués sur les trois positions (2, 3 et 6) de l'unité glucosidique.

Les supports chromatographiques utilisant un bras espaceur contenant une fonction thioéther ont été largement utilisés pour la discrimination d'énantiomères. Par exemple, Rosini et coll. ont décrit l'immobilisation d'alcaloïdes de quinquina grâce à ce type de bras dans TETRAHEDRON LETT. 26, 3361-3364 1985. Plus récemment, Tambute et coll. ont décrit l'immobilisation de dérivés de tyrosine selon la même technique dans NEW J. CHEM. 13, 625-637, 1989. Plus récemment encore, Caude et coll. ont exposé les résultats de leurs travaux et ont montré l'avantage du bras thioéther en terme de stabilité chimique dans J. CHROMATOGR. 550, 357-382, 1991.

Salvadori et coll. ont montré l'efficacité de dérivés de quinine sous forme d'adduits de tétraoxyde d'osmium dans l'oxydation asymétrique d'oléfines en phase homogène et hétérogène, dans CHIRALITY 4, 43-49, 1992. Ces dérivés étaient présentés sous forme de copolymères d'acrylonitrile et de dérivés de quinine portant un bras espaceur sulfoxyde. L'efficacité de la présence de la fonction sulfoxyde n'est pas discutée dans ce type de support utile en synthèse asymétrique.

D'autre part, l'accès à des mono-alkénylcyclodextrines a été précédemment exposé par Hanssian et coll. dans J. ORG. CHEM, 1995, 60, 4786-4797. Ils ont décrit la synthèse de mono-2-allyl-α-cyclodextrine par action du bromure d'allyle et de l'hydrure de lithium en présence de diméthylsulfoxyde. Le milieu réactionnel est ensuite purifié à l'acétone, puis une purification par chromatographie sur gel de silice vierge dans un mélange acétonitrile/eau 90/10 en volumes, puis 40/10 en volumes, permet d'obtenir une monoallyl-α-cyclodextrine. Toutefois, de l'aveu des auteurs, les données obtenues par résonance magnétique nucléaire du proton montrent la présence de 20 % de mono-6-allyl-α-cyclodextrine.

Schürig et coll. ont décrit (J. HIGH RESOLUT. CHROMATOGR. 13, 713-717, 1990) la synthèse de dérivés allyle, pentényle et octényle de β-CD, qui ont ensuite été greffés sur des hydrogénopolysiloxanes (méthylhydrogénopolysiloxane + diméthylpolysiloxane = copolymère) par hydrosilylation dans le toluène en présence d'hexachlorure de dihydrogénoplatine. Aucune étude structurale sur la pureté chimique et la régiosélectivité des dérivés de CD ne vient confirmer la position 6 comme point d'accrochage des motifs alkényles.

Cette régiosélectivité en 6 a d'ailleurs été contestée par Ciucanu et König dans J. CHROMATOGR. A, 685, 166-171, 1994. Ces derniers y décrivent par ailleurs la synthèse et la purification de perméthyl- et de perpropylmono-O-pent-1-ényl-β-cyclodextrine, puis l'hydrosilylation de la double liaison avec le diméthoxyméthylhydrosilane ou le dichlorométhylhydrosilane.

Yi et coll. (J. CHROM. A, 673, 219-230, 1994) ont décrit la synthèse de mono-dérivés de type 4-allyloxy benzoyle en position 2 ou en position 3, le reste des hydroxyles ayant été perméthylés. Toutefois, le champ de l'appareil de résonance magnétique nucléaire utilisé pour de tels composés (200 MHz) peut sembler un peu faible pour l'identification complète des produits obtenus, au vu de la complexité du problème à traiter et de la précision nécessaire sur l'intégration des signaux éthyléniques. Ces dérivés ont été greffés sur hydrométhylpolysiloxanes (copolymère d'octaméthylcyclotétrasiloxanes et de diméthoxyditolylsilane).

K.Fujita décrit dans J. AM. CHEM. SOC., 108, 2030-2034, 1986 la synthèse et la purification de mono- et de 3A-3C et 3A-3D-di-O-(β-naphtalène-sulfonyle)-β-cyclodextrine.

Yi et coll. ont montré dans J. HETEROCYCLIC CHEM. 32, 621, 1995 différentes voies d'accès à des di-dérivés de type 6A-6C et 6A-6D-di-O-(4-allyloxyphényle) et complètement perméthylés. Le contrôle de la régiosélectivité des composés obtenus est réalisé grâce à l'utilisation de ditosylates de tailles différentes. Lesdits composés ont été copolymérisés avec un dihydrodioctyldécaméthylhexasiloxane.

Bradshaw et coll. ont décrit la synthèse de di-dérivés de cyclodextrines de type 6A-6B-di-O-(4-allyloxyphényl) per-O-méthyl-β-cyclodextrines par l'utilisation de 2,4-diméthoxy-1,5-benzènedisulfonyldichlorure. Lesdits dérivés ont ensuite été copolymérisés avec un dihydrogénododécaméthylhexasiloxane. Voir en particulier : ANAL. CHEM. 67, 23, 4437-4439, 1995.

Thuaud et coll. ont décrit la synthèse de polymères contenant des motifs cyclodextrines par condensation de ces dernières avec des réactifs bifonctionnels (épichlorhydrine) (J. CHROMATOGR. 555, 53-64, 1991 et CHROMATOGRAPHIA, 36, 373-380, 1993). La structure du polymère n'est pas régiosélectivement définie.

Ce polymère avait auparavant été synthétisé par P.Sugiura et coll. (BULL. CHEM. Soc. JPN. 62, 1643-1651, 1989) qui avaient également utilisé des diépoxydes comme agents de polymérisation.

La polymérisation de monomères éthyléniques est utilisée depuis de très nombreuses années ("Principle of Polymer Chemistry". Paul J. Flory. Editor Cornell Press New-York 1953 Edition). L'homopolymérisation de mono-dérivés et de di-dérivés de cyclodextrines comportant une double liaison carbone-carbone polymérisable n'avait pas été décrite avant la présente invention. Elle est réalisée à l'aide d'un initiateur de radicaux libres (composé de type azo ou peroxyde) à une température variant de 50 à 200 °C, l'échelle de température préférable s'étendant de 100 à 150 °C. Les durées de réaction s'étendent de 1 à 48 heures. Les solvants préférés sont le toluène, le dioxane, le chloroforme, le tétrahydrofurane, les alcools, le diméthylformamide, le diméthylsulfoxyde ou un mélange de ces solvants.

La réaction de polymérisation peut être conduite ou non en présence d'un support, celui-ci étant de préférence modifié en surface par des fonctions éthyléniques, hydrogénosilanes ou thiols.

La copolymérisation de monomères éthyléniques a été également très largement décrite, par exemple dans "Principle of Polymer Chemistry", cité plus haut. Les conditions de synthèse mises en oeuvre sont identiques à celles retenues pour l'homopolymérisation (décrites ci-dessus). Les comonomères utilisés peuvent être mono fonctionnels (styrène par exemple), difonctionnels (divinylbenzène, éthanedithiol ou tétraméthyldisiloxane par exemple) ou polyfonctionnels (triméthacrylate de glycérol par exemple).

La réaction de copolymérisation peut être conduite ou non en présence d'un support, celui-ci étant de préférence modifié en surface par des fonctions éthyléniques, hydrogénosilanes, ou thiols. La polymérisation par hydrosilylation est connue per se et décrite dans J. CHROMATOGR., 594, 283-290, 1992. La technique de base exposée dans cet article peut être utilisée pour préparer les polymères de cyclodextrines. La réaction est de préférence conduite en présence d'un catalyseur, un complexe métallique en général, par exemple un complexe de platine ou de rhodium, à des températures variant de 50 à 180 °C et de préférence vers 100 °C. Les solvants inertes vis-à-vis de la réaction de polymérisation mise en oeuvre sont utilisés pour diluer le milieu réactionnel. Les solvants préférés sont le toluène, le dioxane, le chloroforme, le tétrahydrofurane et le xylène ou les mélanges de ces solvants.

Les durées de réaction s'étendent de 1 à 48 heures car la réaction de polymérisation par hydrosilylation révèle une cinétique relativement lente.

La réaction de polymérisation peut être conduite ou non en présence d'un support, celui-ci étant de préférence modifié en surface par des fonctions styryle, méthacryloyle, méthacrylamido, acrylamido, hydrogénosilane, vinyle ou thiol.

Les cyclodextrines sont des oligosaccharides cycliques de-formule générale :

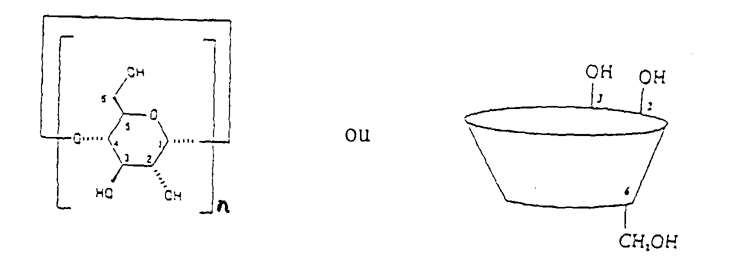

La valeur n = 6 correspond à une α-cyclodextrine ; la valeur n = 7 correspond à une β-cyclodexnine ; la valeur n = 8 correspond à une γ-cyclodextrine.

Les fonctions alcools peuvent être aisément transformées par des groupements divers tels que les chlorures d'acides et les isocyanates, pour conduire à des fonctions esters ou carbamates. La réaction avec des halogénures conduit à des éthers. Quelles que soient les conditions réactionnelles utilisées dans les réactions mises en jeu, celles-ci conduisent toujours à des mélanges. En effet, le plus souvent, plusieurs unités osidiques sont concernées par les réactions décrites ci-dessus avec une régiosélectivité (position 2, 3 ou 6 sur l'unité osidique) difficile à maîtriser.

La présente invention décrit une méthode de synthèse et de purification de mono et de di-dérivés purs de cyclodextrines régiosélectivement liés en position 2, 3 ou 6 d'une unité osidique. Les di-dérivés de cyclodextrines peuvent concerner deux unités osidiques différentes. Celles-ci adoptent alors la terminologie générale suivante :

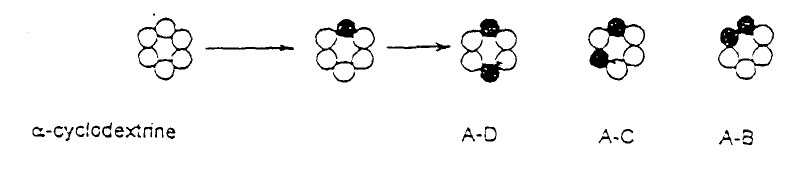

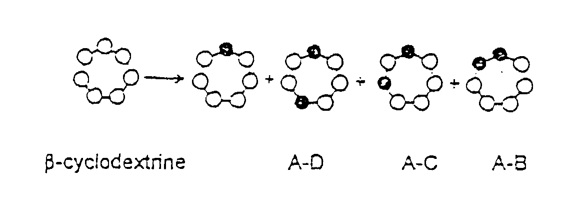

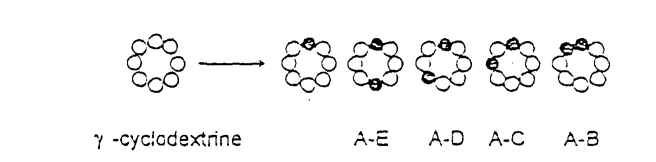

Les cyclodextrines pures de formules (X a), (X b), (X c), (XI a), (XI b), (XI c), (XI d), (XI e) et (XI f) peuvent être obtenues selon le schéma réactionnel suivant : 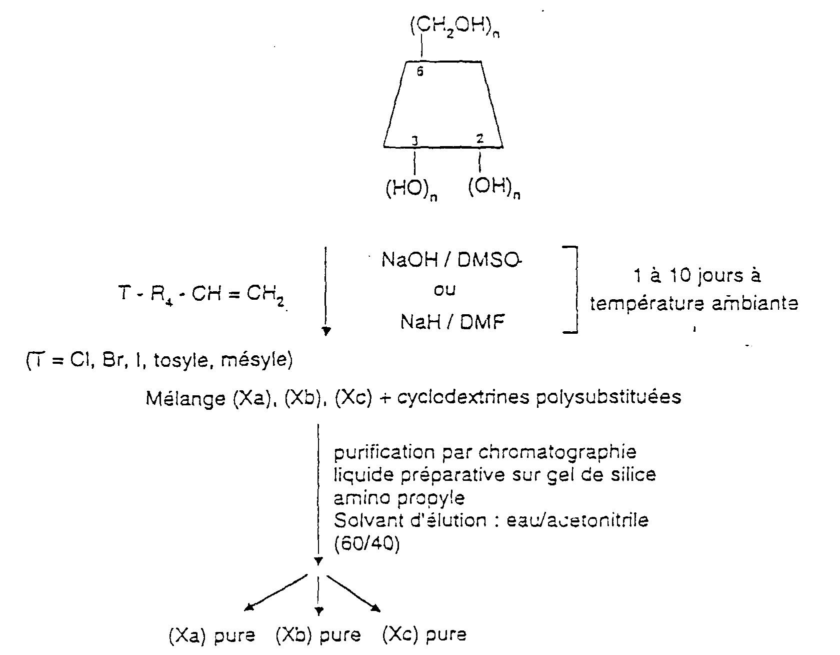 et (XI a), (XI b), (XI c), (XI d), (XI e) et (XI f) pures.

La réaction entre la cyclodextrine et le composé de formule générale T-R₄-CH = CH₂ peut être conduite dans les solvants couramment employés en chimie organique, comme par exemple l'eau, le dioxane, le tétrahydrofurane, le toluène, les solvants halogénés (chloroforme, chlorure de méthylène...), les cétones (acétone, méthyléthylcétone), l'acétonitrile, le diméthylformamide, le diméthylsulfoxyde ou des mélanges de ces solvants.

Pour des raisons de solubilités du produit de départ et des produits formés, les solvants préférés sont le diméthylsulfoxyde et le diméthylformamide. La faible réactivité des hydroxydes primaires et secondaires des cyclodextrines conduit à utiliser de larges excès de réactif T-R₄-CH = CH₂. La température de réaction varie de 0 à 100 °C, la température préférée s'échelonnant entre 0 et 30 °C pour favoriser l'apparition des mono et di-dérivés et pour éviter la formation de polydérivés. Les durées varient de 1 à 10 jours. Après réaction, le milieu réactionnel est en général coulé sur de l'acétone pour précipiter les différents constituants du mélange réactionnel et les isoler par filtration.

Le précipité est purifié par chromatographie préparative sur support de type gel de silice ou d'alumine, ou de zircone ou d'oxyde de titane, ou sur support de type polymère organique, comme par exemple le styrène-divinylbenzène ou l'alcool polyvinylique.

Ces supports sont modifiés en surface par des fonctions amino (aminopropyle par exemple) ou alkyle (octyle ou octadécyle par exemple) ou aryle phényle par exemple) ou diol.

Le processus chromatographique est mis en oeuvre avec des solvants organiques miscibles à l'eau, comme par exemple l'acétonitrile, l'éthanol, le méthanol, l'isopropanol, le dioxane, le diméthylsulfoxyde et le diméthylformamide, en mélange avec de l'eau, à des température variant de 0 à 80 °C, les températures préférées s'échelonnant entre 15 et 30 °C.

Le suivi de la séparation est réalisé grâce à la détection par indice de réfraction et la pureté des dérivés de cyclodextrines est déterminée par HPLC ou CCM.

Pratiquement, le système HPLC est mis en oeuvre sur une colonne d'amino-propyle-silice 100 Å, 5µm, de dimensions 250 x 4,6 mm, détection Ri, éluant : acétonitrile/eau 70/30 en volumes. Le système CCM utilise des plaques de silice vierge "Merck". La phase mobile est un mélange 50/50 en volumes d'ammoniaque à 30 % et d'éthanol. La révélation se fait à la vapeur d'iode.

L'isolement des produits purifiés est réalisé par évaporation sous vide de l'eau et du solvant organique à une température variant de 40 à 80 °C masse sous un vide variant de 1 à 50 mm de mercure.

Le bilan chimique de la réaction mise en jeu est le suivant : 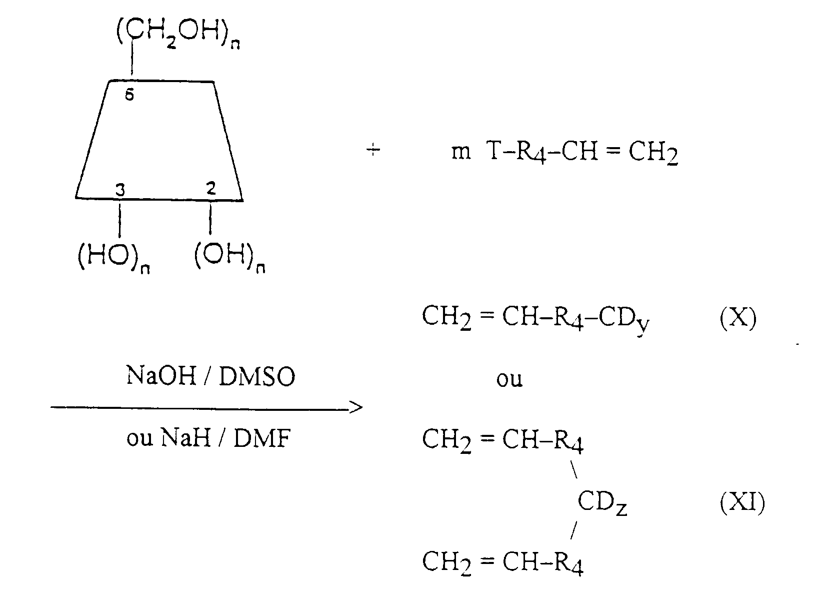 avec m variant de 1 à 24 (moles/mole de CD).

La formule (X) représente les formules mono-O-alkényl-CD possibles : soit mono-2-O-, mono-3-O- et mono-6-O-.

La formule (XI) représente les formules de di-dérivés alkényl-CD, les dérivations étant réalisées sur une même unité glucosidique ou sur des unités différentes (positions A-B, A-C, etc...) avec des régiosélectivités différentes ou identiques.

Les composés de formules générales (X) et (XI) peuvent être greffés sur supports fonctionalisés pour conduire aux supports de formules générales (I y), (I a), (I b), (I z), (I c) et (I d), les fonctions hydroxyles vacantes pouvant également être dérivées ou non avant ou après greffage sur support. Par exemple le β-mercaptopropyldiméthoxysilane est greffé par un lien covalent sur du gel de silice selon le schéma réactionnel suivant : 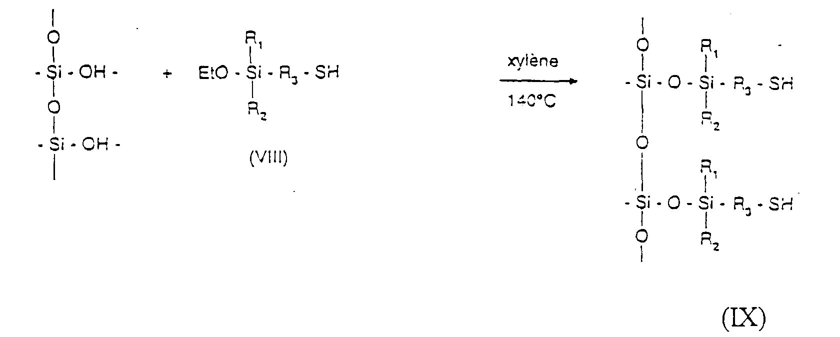 avec
R₁ = R₂ = CH₃-CH₂-O-
   et
R₃ = -(CH₂)₃-

La réaction est conduite dans le xylène pour éliminer d'abord l'eau contenue dans le gel de silice et ensuite pour éliminer l'éthanol formé par hydrolyse des fonctions éthoxysilanes. Le support obtenu possède les caractéristiques suivantes :
% C = 5,26
% S = 2,68
% H = 1,10
soit, après calcul, une densité de fonctions thiols égale à 0,85 mmol/g, ou 0,89, si l'on considère que 2 ou 3 éthoxysilanes ont effectivement réagi sur le gel de silice. On a modifié 30 % des SiOH "théoriques". En partant d'une densité de 8.10⁻⁶ mole de SiOH/m² avec un support à 360 m²/g, on a une densité de 28 mmoles/g de silice. Le support obtenu, "mercaptopropylsilice" ou silice "thiol" est ensuite mis en réaction avec un composé de formule (X) ou (XI). L'addition anti-Markovnikov de la double liaison sur la silice thiol est réalisée en présence d'un initiateur de radicaux libres (C.Rosini, TETRAHEDRON LETT. 1985, 26 (28), 3361, et A.Tambute, NEW J. CHEM., 1989, 13, 625-637).

Par exemple, la mono-2-O-pentényl-β-cyclodextrine est greffée sur support thiol selon le schéma réactionnel suivant : 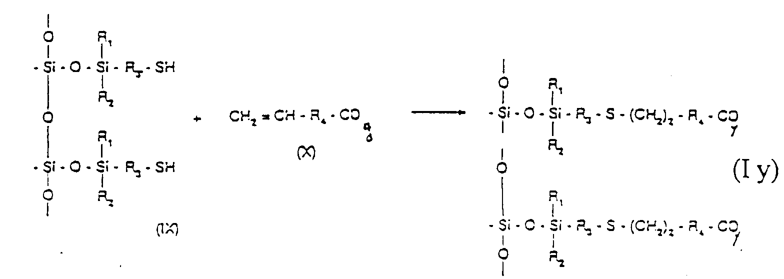 avec
R₁ = R₂ = CH₃-CH₂-O-
R₃ = -(CH₂)₃-
R₄ = -(CH₂)₃- 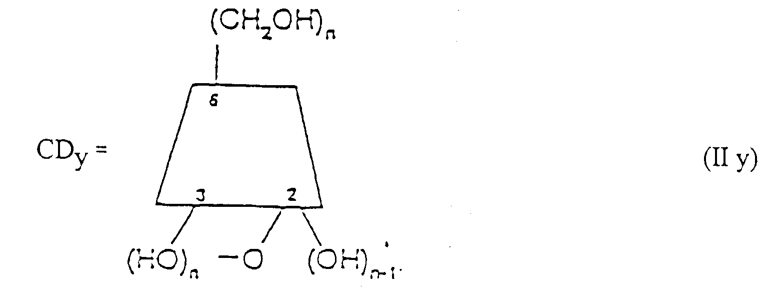 et
n = 7.

La réaction est conduite dans le chloroforme à reflux en présence d'azo-bis isobutyronitrile (AIBN). Les supports ainsi obtenus font partie de l'invention.

Ces supports peuvent être ensuite oxydés pour transformer la fonction thioéther en sulfoxyde à l'aide d'eau oxygénée ("Organic compounds of bivalent Sulfur" vol.2, pp 64-66, Chemical Publishing Company, New-York, 1960), d'indobenzène-dichlorure (Barbieri, J. CHEM. Soc. C659, 1968), de métaperiodate de sodium (Léonard, J. ORG CHEM., 27, 282,1962) ou de tertiobutyloxychlorure (Walling, J. ORG. CHEM. 32, 1286, 1967) ou de peracides.

Les supports sulfoxydes précédemment obtenus peuvent être oxydés en sulfones à l'aide de permanganate de potassium ou d'eau oxygénée (Heubert, CHEM. COMM., 1036, 1968 et Curci, TETRAHEDRON LETT., 1749, 1963).

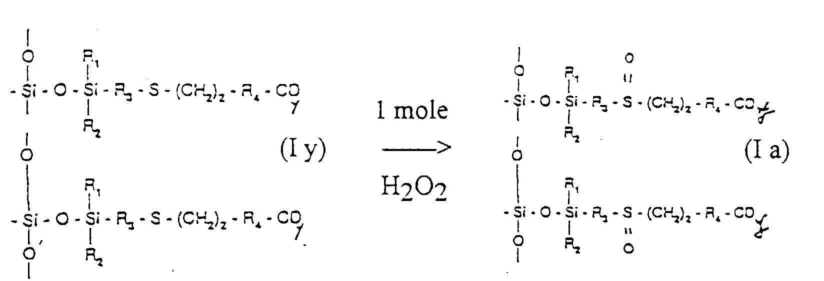

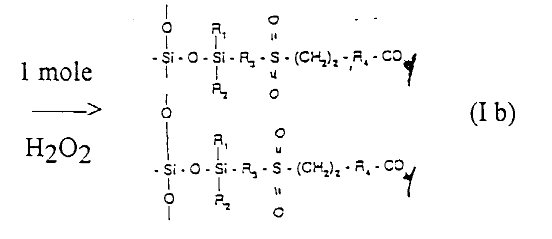

L'agent oxydant préférentiellement utilisé est l'eau oxygénée. Le solvant réactionnel est en général de l'eau ou un alcool ou un solvant organique miscible avec l'eau. La température masse varie de 10 à 40 °C. La durée de réaction varie de 1 à 8 heures.

A titre d'exemple, le support précédent, de type mono-2-O-pentényl-β-cyclodextrine greffé sur silice thiol, a été directement oxydé en sulfone avec un excès d'eau oxygénée en solution dans eau/méthanol à 25 °C. La cinétique de la réaction est contrôlée par suivi de la teneur en eau oxygénée dans le milieu réactionnel à l'aide d'un dosage avec un réducteur.

Le support oxydé, de type (I b), possède la structure suivante : 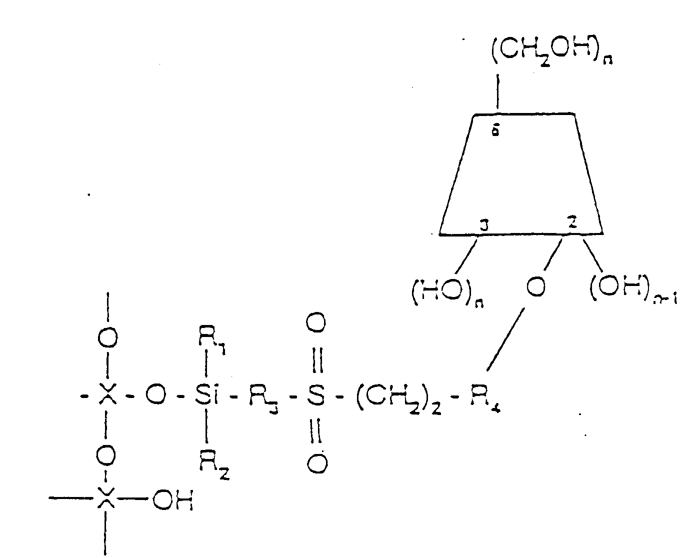 avec
n = 7
R₃ = R₄= -(CH₂)₃-
R₁ = R₂ = CH₃-CH₂-O-
   ou OH
   ou O-support.

Les performances des supports (I y) et (I b) ont été comparées dans le domaine de la séparation d'énantiomères en chromatographie liquide haute performance (HPLC). Ces supports ont été compressés sous 500 bar de pression dans des tubes pour colonne HPLC de 250 mm x 4,6 mm (longueur par diamètre intérieur) dans des conditions identiques.
- k'₁ et k'₂ sont les facteurs de capacité, c'est-à-dire que, si i = 1 ou 2,${\text{k'}}_{\text{1}} \text{=} \frac{{\text{t R}}_{\text{i}} {\text{- t}}_{\text{0}}}{{\text{t}}_{\text{0}}} \text{,}$ où t_{Ri} est le temps de rétention du composé i et t₀ est le temps mort ;
- α est le facteur de sélectivité :$\text{α =} \frac{{\text{t}}_{\text{R2}} {\text{- t}}_{\text{0}}}{\text{t} {\text{}}_{{\text{R}}_{\text{1}}} {\text{- t}}_{\text{0}}} \text{=} \frac{{\text{k'}}_{\text{2}}}{{\text{k'}}_{\text{1}}} \text{;}$
- R_{S} est le facteur de résolution : 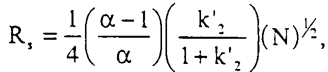 où N est le nombre de plateaux ;$\text{N = a} {\left(\frac{\text{t} {\text{}}_{\text{R}}}{\text{ω}}\right)}^{\text{2}}$ avec ω = largeur de pic à une ordonnée donnée, reliée au carré de l'écart type ou variance σ² par relation ω² = ασ²,
   soit$\text{N = 16} {\left(\frac{\text{t} {\text{}}_{\text{R}}}{\text{ω}}\right)}^{\text{2}} \text{= 5,54} {\left(\frac{\text{t} {\text{}}_{\text{R}}}{\text{ω}}\right)}^{\text{2}} \text{.}$

Les résultats sont indiqués dans le Tableau 1 de la page 17.

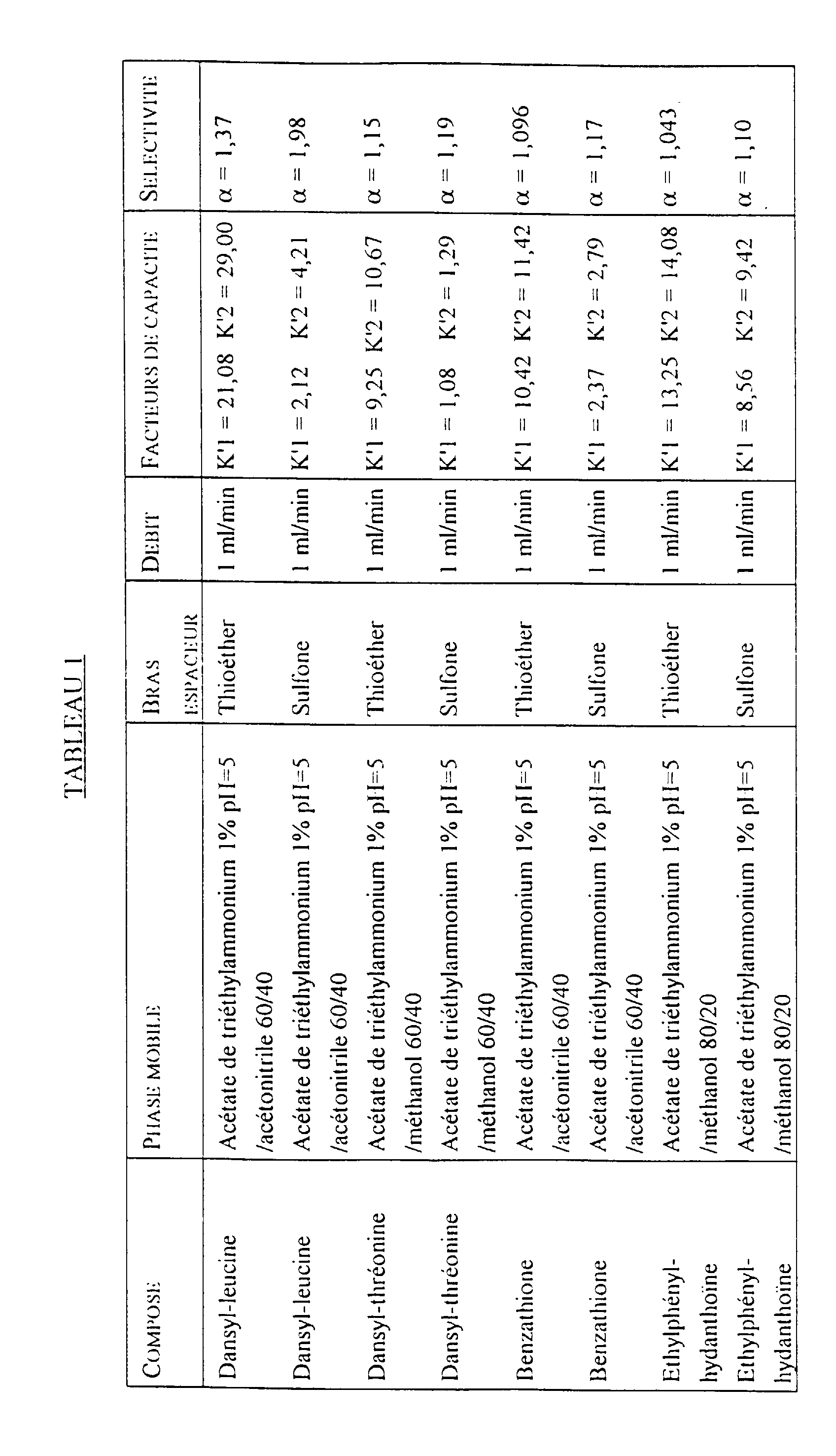

Il y a un intérêt à modifier tout ou partiellement les fonctions hydroxyles d'une cyclodextrine pour modifier les propriétés d'encapsulation de celle-ci. Une modification totale des fonctions hydroxyles confère aux cyclodextrines des propriétés différentes des cyclodextrines natives. Par exemple, les cyclodextrines méthylées possèdent un forte solubilité dans l'eau en comparaison de celles obtenue avec les CD natives.

Le support de l'exemple précédent a été modifié par action d'un isocyanate. L'addition d'alcools sur les isocyanates est connue per se (Satchell, CHEM. SOC. REV., 4, 231-250, 1975). La réaction est généralement conduite en milieu basique (pyridine, méthylamine par exemple), en présence d'un catalyseur organométallique (Davies, J. CHENI. SOC., C 2663, 1967).

La température masse varie de 50 à 150 °C masse. Elle est préférentiellement maintenue entre 80 et 120 °C masse. La durée de la réaction varie de 1 à 48 heures et est ajustée en fonction de la réactivité de l'isocyanate utilisé vis-à-vis de l'alcool à transformer.

Dans l'exemple du support précédent, les fonctions alcool primaire et secondaire, vacantes sur la β-CD, ont été percarbamatées par le 3,5-diméthylphénylisocyanate, dans un mélange triéthylamine/pyridine 50/50 à 80 °C masse pendant 24 heures en présence de laurate de dibutylétain.

Ce support possède la structure suivante : 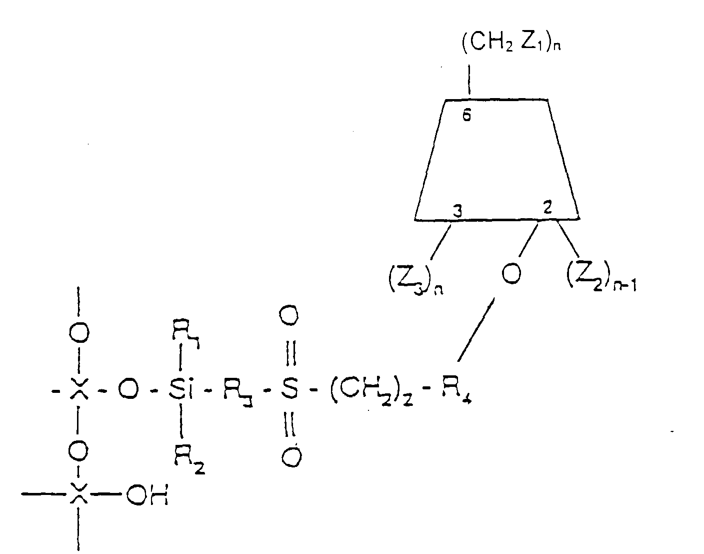 avec
n = 7
R₃ = R₄ = -(CH₂)₃-
R₁ = R₂ = CH₃-CH₂-O-
   ou OH
   ou O-support
et

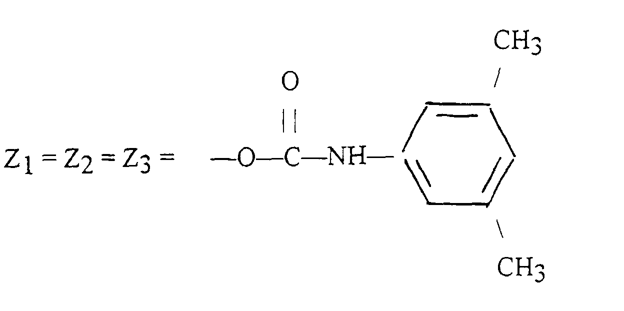

Ce support a été mis en oeuvre comme support chromatographique pour la séparation d'énantiomères. Les résultats sont regroupés en annexe, pages 48-50.

Les polymères de cyclodextrines font actuellement l'objet de recherches diversifiées afin d'accéder à des produits permettant d'utiliser les propriétés d'encapsulation des cyclodextrines à l'échelle industrielle dans des procédés d'absorption/désorption de composés à récupérer (concentrations d'arômes obtenus en milieu aqueux par voie microbiologique par exemple) ou à éliminer (élimination de l'amertume du malt de bière). Sous ces aspects, les voies d'accès et de valorisation de mono et de di-dérivés de cyclodextrines parfaitement définis développés dans cette invention, permettent la synthèse d'homo et de copolymères de CD à partir de monomères caractérisés.

Par exemple, la 2A-2D-di-2-O-allyl-β-cyclodextrine a été copolymérisée en présence d'éthanedithiol pour obtenir un polymère à chaine linéaire. La condensation de composés dithiols avec des dioléfines est généralement menée en présence de radicaux libres (Marvel, J. AM. CHEM. SOC. 70, 993, 1948 et Mayo, CHEM. REV., 27, 387, 1940). La réaction est conduite entre 50 et 200 °C en présence d'un solvant organique de point d'ébullition approprié.

La réaction chimique mise en jeu est la suivante : 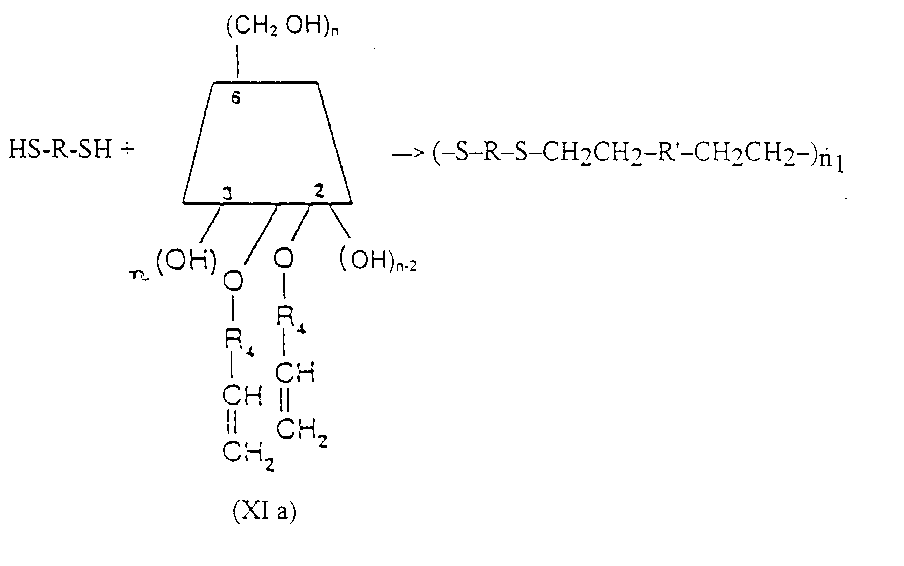 avec
R = -(CH₂)₂-
R₄ = -(CH₂-
n = 7
1 < n1 < 100 000
   et

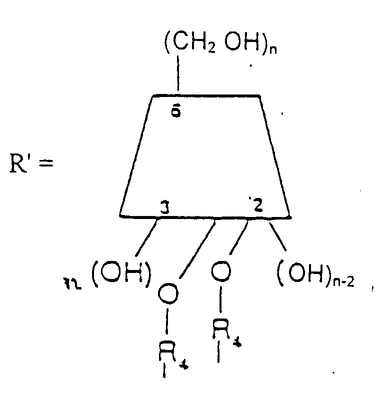

La 2A-2D-di-O-2-allyl-β-cyclodextrine (composé de type (XI a)) a été copolymérisée dans le chloroforme à reflux, en présence d'AIBN pendant 20 jours, en présence d'un léger excès d'éthanedithiol. L'excès d'éthanedithiol a été éliminé par distillation et le polymère obtenu redissous dans le chloroforme. De la silice modifiée en surface par des fonctions hydrogénosilanes (H.W. Stourman, CHROMATOGRAPHIA, 25, 4, 265-271, 1988) a été mise en contact avec le polymère et l'ensemble porté à reflux du chloroforme en présence d'AIBN pendant 5 jours. Le produit de la réaction est filtré et séché 24 heures à 50 °C sous vide.

Le composé obtenu est référencé "POLY-THIOÉTHYL-2,2-DIALLYL-β-CD" ou "PTE-2,2-AL-β-CD".

Une colonne HPLC a été remplie avec ce support. Plusieurs tests ont été réalisés.

### Séparation des ortho, méta et paranitrophénols ainsi que d'autres isomères structuraux.

3 g de PTE-2,2-AL-β-CD sont mis en suspension dans de l'éthanol (20 ml). La suspension est versée dans un système de remplissage pour colonne HLPC (R. Rosset, M Caude et A. Jardy in "Chromatographies en phases liquide et supercritique", édition 1991, pages 177 à 183, (éditeur Masson).

La pression de remplissage est fixée à 600 bar et la colonne utilisée possède les dimensions suivantes: 250 mm de longueur et 4,6 mm de diamètre intérieur. La colonne est mise en oeuvre dans un système chromatographique avec détection U.V. à 254 nm. Les quantités injectées sont 10 µg. Différents systèmes éluants ont été testés : les valeurs de k' obtenues sont les suivantes : (le temps mort tₒ est déterminé avec l'éthanol)

| Isomères du nitrophénol | Eau/méthanol 60/40 | Eau/acétonitrile 60/40 | Eau/méthanol 50/50 | Eau/acétonitrile 50/50 |
|---|---|---|---|---|
| MÉTA | 5,2 | 4,7 | 5,2 | 4,3 |
| ORTHO | 20,4 | 7,6 | 15,4 | 5,1 |
| PARA | 43,2 | 13,1 | 36,4 | 8,9 |

| Isomères du crésol | Eau/méthanol 50/50 |
|---|---|
| MÉTA | 5,2 |
| ORTHO | 15,4 |
| PARA | 24,6 |

| Isomères du nitrotoluène | Eau/méthanol 80/20 |
|---|---|
| MÉTA | 5,9 |
| ORTHO | 7,6 |
| PARA | 11,1 |

| Isomères de la toluidine | Eau/méthanol 80/20 |
|---|---|
| MÉTA | 5,5 |
| ORTHO | 8,8 |
| PARA | 11,0 |

| Isomères de l'aminophénol | Eau/méthanol 80/20 |
|---|---|
| META | 5,4 |
| ORTHO | 7,7 |
| PARA | 9,8 |

### Purification de cyclodextrine-glucosyltransférase (CG-Tase) à partir de Bacillus Circulans E 192 par chromatographie d'affinité.

On détermine l'activité enzymatique de la CG-Tase par mesure du potentiel de cyclisation selon la méthode à la phénolphtaléïne de VIKMON ("Proceedings of the First International Symposium on Cyclodextrine", J. Szejtli, D. Revdel, Publishing Co, London, 1982, page 69). Une unité "U" et la quantité d'enzyme qui produit 1 µmole de β-CD par minute dans des conditions standards de température (50°C) et de pH (7,0) en présence de 5 % (poids/volume) de maltodextrines (Glucidex 12® vendu par Roquette Frères - Lestrem - France) comme substrat.

La colonne HPLC PTE-2,2-AL-β-CD est équilibrée pendant 24 heures avec l'éluant suivant :
10 mM tris-HCl tamponné à pH 7,5
10 mM CaCl₂
0,02 % (poids/volume) de NaN₃

Le débit de percolation est de 1 ml/min et la pression de 850 bar.

5 mg de CG-Tase dissous dans 2 ml d'eau sont injectés sur la colonne et celle-ci est ensuite rincée avec l'élimant tris-HCl précédent. L'élution des protéines est montrée par délection U.V. à 280 nm. La CG-Tase purifiée et éluée dans le mélange suivant :
10 mM tris-HCl tamponné à pH 7,5
10 mM CaCl₂
0,02 % (poids/volume) de NaN₃
1,0 % (poids/volume) de β-cyclodextrine.

La CG-Tase purifiée est éluée après 150 ml et la fraction de coeurs concentrée par ultrafiltration (membrane Y 10 AMICON) puis lyophilisée.

L'activité spécifique de la CG-Tase purifiée et de 125 U/mg, soit un gain de 500 % sur l'activité initiale (25 U/mg).

Une autre technique de copolymérisation peut être mise en oeuvre en utilisant un dihydrogénosiloxane. Cette réaction a été commentée plus haut en page 7.

La 2A-2D-di-O-2-allyl-β-cyclodextrine (composé de type (XI a)) a été copolymérisée avec le 1,1,3,3,-tétraméthyldihydrogénosiloxane dans le toluène à 60 °C pendant 24 heures. Un léger excès de 1,1,3,3,-tétraméthyldihydrogénosiloxane a été utilisé. Cet excès a été distillé en fin de réaction.

La réaction est la suivante : 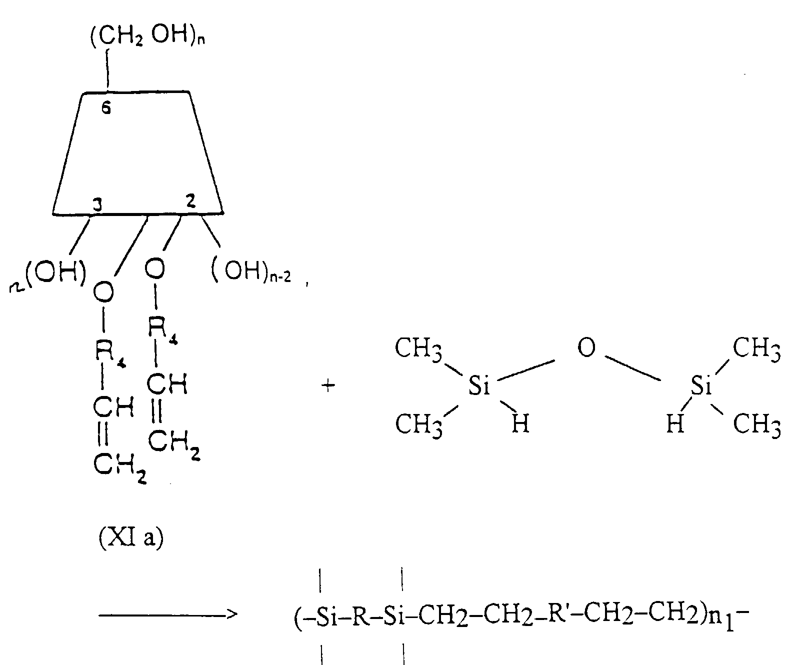 avec
R = oxygène
R₄ = ―(CH₂―
n = 7
1 < n₁ < 100 000
et

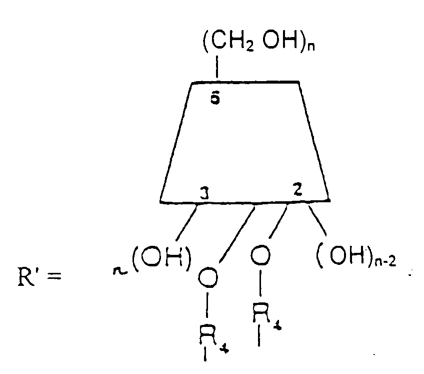

Un support modifié en surface avec des fonctions sulfhydryles (de formule générale (X)), par exemple de la silice "thiol" ou "mercaptopropyle" est mis en contact avec le polymère dissous dans le chloroforme en présence d'AIBN. Le reflux est maintenu 48 heures. Le support est filtré, lavé puis séché.

Le composé obtenu est référencé "POLYSILOX-2,2 DIALLYL-β-CD". Sa mise en oeuvre comme support chromatographique est réalisée selon les conditions décrites précédemment.

### Séparation d'amino-acides dansylés.

Les conditions chromatographiques et les solutés tests employés sont ceux décrits par Willie L. Hinze dans ANALYTICAL CHEMISTRY, vol.57, No.1, January 1985, pages 237 à 242.

Les facteurs de sélectivité α obtenus sur chaque amino-acide dansylé (dérivé de type 1-N,N-[((diméthylaminonaphtalène)-5-sulfonamide))] se révèlent de manière inattendue toujours supérieurs à ceux obtenus par Hinze.

| | |
|---|---|
| Acide α-amino-N-butyrique | α = 1,29 |
| Arginine | 1,32 |
| Méthionine | 1,17 |
| Norleucine | 1,32 |
| Norvaline | 1,17 |
| Phényl-alanine | 1,28 |
| Sérine | 1,23 |
| Tryptophane | 1,01 |
| Thréonine | 1,32 |
| Valine | 1,22 |

### Séparation d'isomères structuraux.

Les conditions de chromatographie HPLC décrites par D.W. Armstrong dans ANALYTICAL CHEMISTRY 1983, 55, 2375-2377 ont été reproduites.

| | | |
|---|---|---|
| Acide ortho-amino benzoïque | K' = 4,0 | |
| Acide méta-aminobenzoïque | K' = 7,8 | α(méta/ortho) = 1,95 |
| Acide para-aminobenzoïque | K' = 10,1 | α(para/ortho) = 2,52. |

Les facteurs de sélectivité obtenus par Armstrong sont respectivement de 1,54 (m/o) et de 1,82 (p/o).

Les supports chromatographiques selon l'invention possèdent les structures chimiques de formules (I y), (I a), (I b), (I z), (I c) et (I d) : 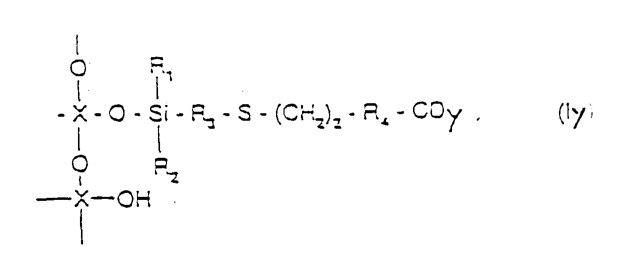 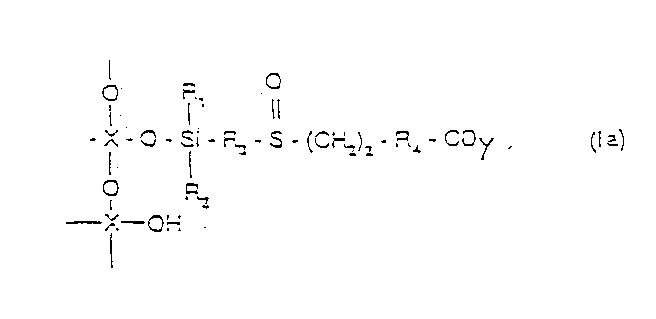 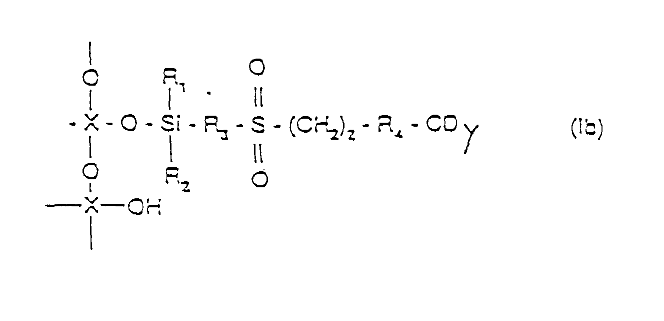 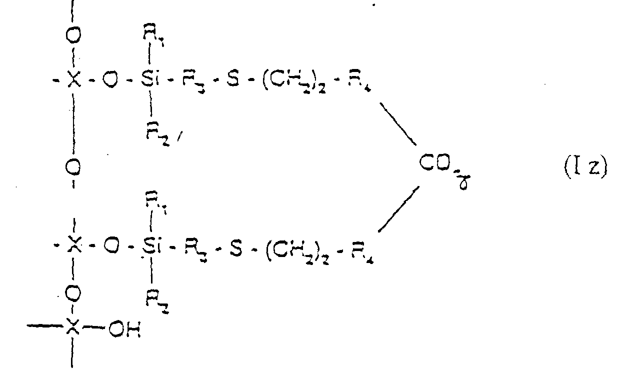 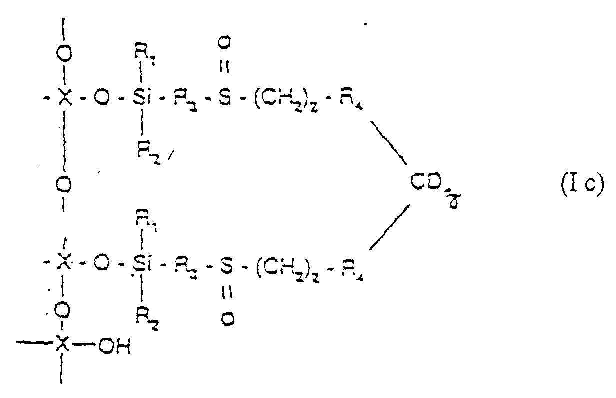 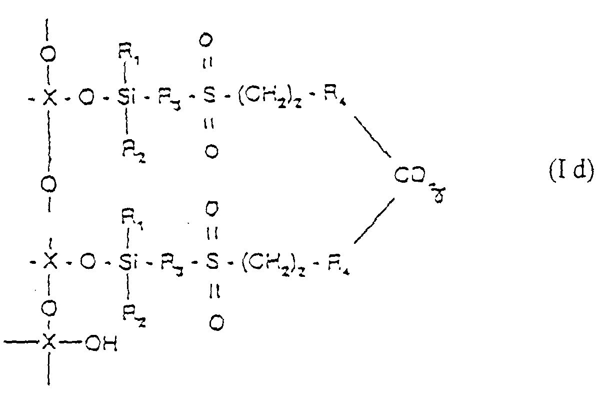 dans lesquelles :
X représente Si, Zr, Ti, Mg ou Al ou un polymère organique,
R1 et R2, identiques ou différents, représentent un atome d'halogène ou un groupement alkyle de C1 à C6, linéaire ou ramifié, alkoxy de C1 à C6, linéaire ou ramifié, hydroxy, aryle, éventuellement substitué par un ou plusieurs, identiques ou différents, atomes d'halogène ou groupements alkyles, alkoxy, hydroxy ou trihalogénoalkyle,
R3 et R4, identiques ou différents, représentent un groupement alkyle de C1 à C20, ou aryle, éventuellement substitué par un groupement alkyle de C1 à C20,

CDy représente :
- une cyclodextrine native de formule (IIy), (IIIy) ou (IVy) : 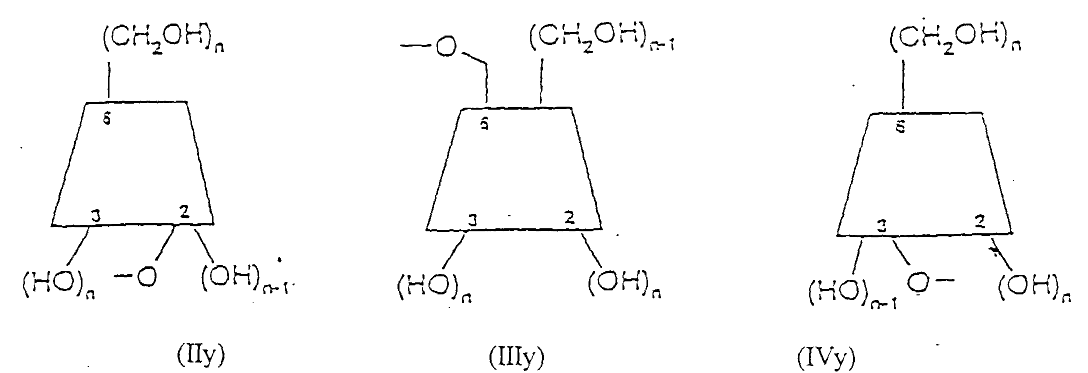 dans lesquelles n = 6 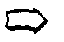 α-cyclodextrine ; n = 7 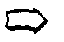 β-cyclodextrine ; ou n = 8 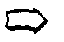 γ-cyclodextrine,
- ou une cyclodextrine modifiée de formule (Vy), (VIIy) ou (VIIy) : 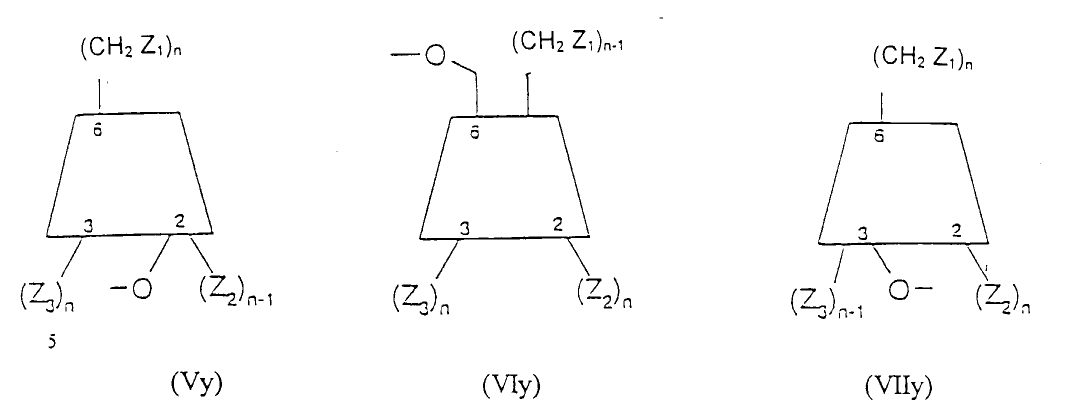
dans lesquelles :
n a la même signification que dans les formules (II_{y}), (III_{y}) et (IV_{y}) ;

Z₁ représente -Y₁W₁
Z₂ représente -Y₂W₂
Z₃ représente -Y₃W₃ et
Y₁, Y₂, Y₃, identiques ou différents, représentent un atome d'oxygène, de soufre, un groupement amino, ou un groupement sulfoxyde ou sulfone.
W₁, W₂, W₃, identiques ou différents, représentent :
   - un groupement A₂-A₁-A-, dans lequel :
      A représente -CO- ou -CS-,
      A₁ représente une liaison ou un groupement amino,
      A₂ représente un groupement alkyle (C₁-C₂₄) linéaire ou ramifié, éventuellement substitué par un groupement aryle ou un groupement aryle, lui-même éventuellement substitué par un groupement alkyle (C₁-C₂₄) linéaire ou ramifié, étant entendu que les groupements aryles peuvent également être substitués par un ou plusieurs, identiques ou différents, atome(s) d'halogène, ou groupement(s) alkyle(s) (C₁-C₆) linéaire(s) ou ramifié(s), hydroxy, trihalogénoalkyle (C₁-C₆) linéaire(s) ou ramifié(s),
   - un groupement alkyle (C₁-C₂₄) linéaire ou ramifié, en particulier méthyle, éthyle ou hydroxypropyle,
   - un groupement cycloalkyle (C₃-C₈),
   - un groupement hétérocyclique,
   - ou un groupement osidique ou polyosidique, en particulier glucosyle, diglycosyle, thioglycosyle ou maltosyle.

   Z₁, Z₂ ou Z₃ représente une fonction aldéhyde, une fonction acide ou ester carboxylique, une fonction sulfinamide ou sulfimide, une fonction hydroxyle, une fonction acide sulfonique, une fonction sulfate de sodium, de potassium ou d'ammonium, une fonction éthyl- propyl- ou butylsulfonique, une fonction acide phosphorique ou une fonction phosphate de sodium, de lithium, de potassium ou d'ammonium ,

   Z₁ et Z₃ peuvent représenter une fonction 3,6 anhydro.
   Z₂ et Z₃ peuvent représenter une fonction 2,3 anhydro.

CD_{z} représente :
- une cyclodextrine native de formule (II_{z}), (III_{z}), (IV_{z}), (II_{zz}); (III_{zz}) ou (IV_{zz}): 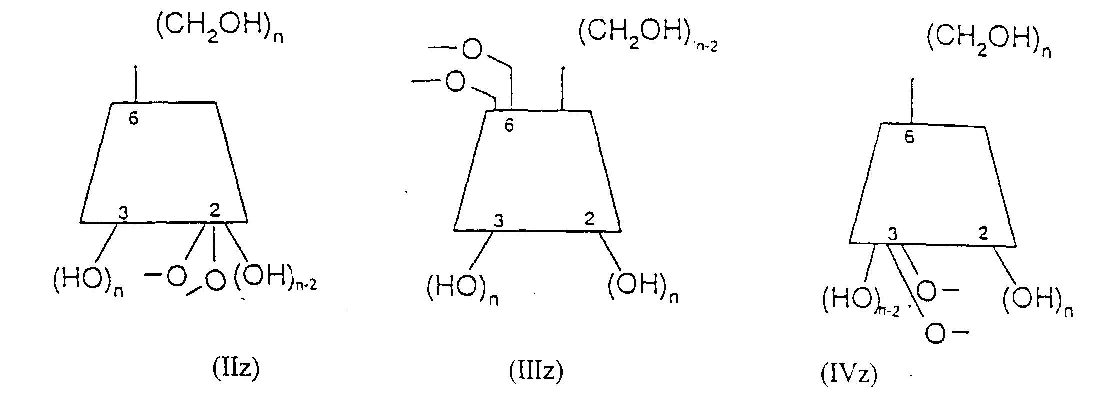 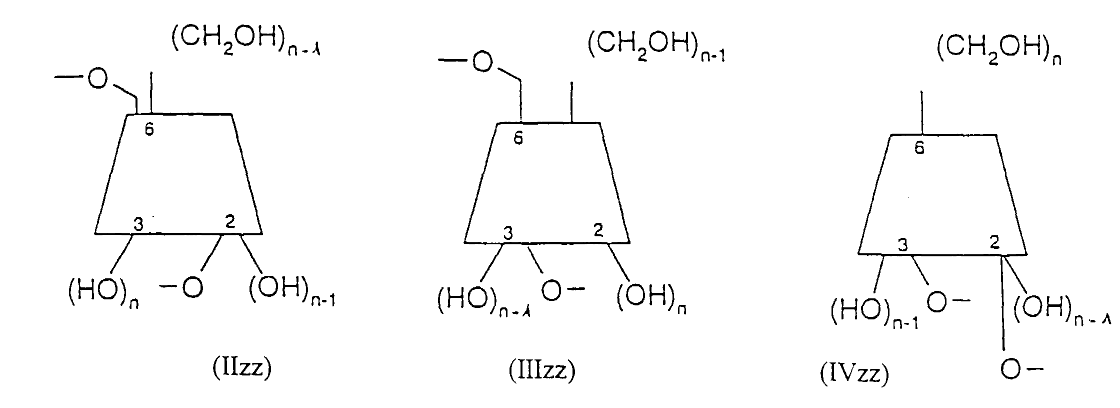 dans lesquelles n = 6 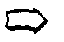 α-cyclodextrine ; n = 7 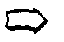 β-cyclodexdine ; ou n = 8 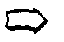 γ-cyclodextine,
   ou une cyclodextrine modifiée de formule (V_{z}), (VI_{z}), (VII_{z}), (V_{zz}), (VI_{zz}) ou (VII_{zz}): 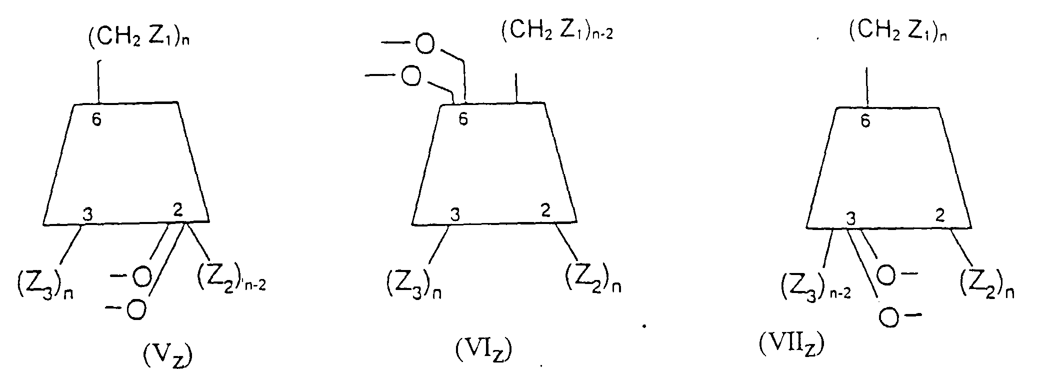 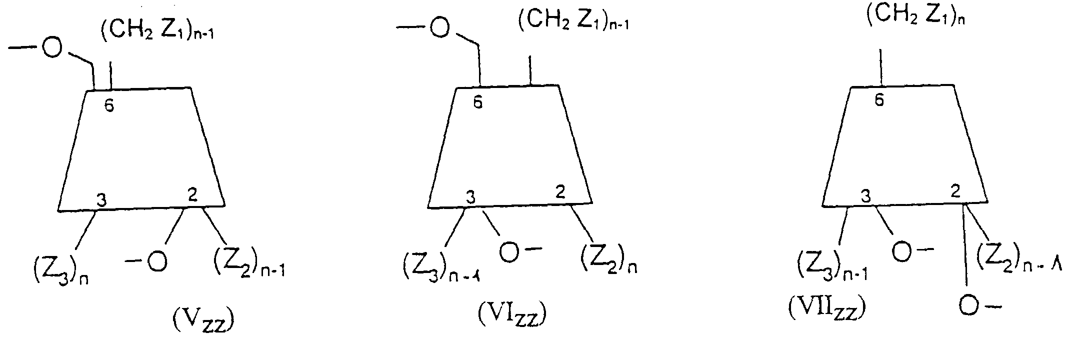 dans lesquelles :
   n a la même signification que dans les formules (II_{z}), (III_{z}), (IV_{z}), (II_{zz}); (III_{zz}) et (IV_{zz}),

   Z₁ représente -Y₁W₁
   Z₂ représente -Y₂W₂
   Z₃ représente -Y₃W₃ et
   Y₁, Y₂, Y₃, identiques ou différents, représentent un atome d'oxygène, de soufre, un groupement amino, ou un groupement sulfoxyde ou sulfone. W₁, W₂, W₃, identiques ou différents, représentent :
      - un groupement A₂-A₁-A-, dans lequel :
         A représente -CO- ou -CS-,
         A₁ représente une liaison ou un groupement amino,
         A₂ représente un groupement alkyle (C₁-C₂₄) linéaire ou ramifié, éventuellement substitué par un groupement aryle ou un groupement aryle, lui-même éventuellement substitué par un groupement alkyle (C₁-C₂₄) linéaire ou ramifié, étant entendu que les groupements aryles peuvent également être substitués par un ou plusieurs, identiques ou différents, atome(s) d'halogène, ou groupement(s) alkyle(s) (C₁-C₆) linéaire(s) ou ramifié(s), hydroxy, trihalogénoalkyle (C₁-C₆) linéaire(s) ou ramifié(s),
      - un groupement alkyle (C₁-C₂₄) linéaire ou ramifié, en particulier méthyle, éthyle ou hydroxypropyle,
      - un groupement cycloalkyle (C₃-C₈),
      - un groupement hétérocyclique,
      - ou un groupement osidique ou polyosidique, en particulier glucosyle diglycosyle, thioglycosyle ou maltosyle.

   Z₁, Z₂ ou Z₃ représente une fonction aldéhyde, une fonction acide ou ester carboxylique, une fonction sulfinamide ou sulfimide, une fonction hydroxyle, une fonction acide sulfonique, une fonction sulfate de sodium, de potassium ou d'ammonium, une fonction éthyl- propyl- ou butylsulfonique, une fonction acide phosphorique ou une fonction phosphate de sodium, de lithium, de potassium ou d'ammonium;

   Z₁ et Z₃ peuvent représenter une fonction 3,6 anhydro ;
   Z₂ et Z₃ peuvent représenter une fonction 2,3 anhydro.

Dans les définitions ci-dessus, les groupements aryles sont de préférence des groupements phényles, éventuellement substitués.

La très grande pureté des supports selon l'invention les rend particulièrement utiles pour la séparation d'énantiomères à partir de mélanges racémiques.

L'invention s'étend également au procédé d'obtention des supports chromatographiques de formules (I y), (I a), (I b), (I z), (I c) et (I d).

Ce procédé est caractérisé en ce que l'on réalise, dans une première étape, la synthèse d'un gel de silice portant des groupements mercaptoalkyle, que l'on greffe, dans une deuxième étape, sur une cyclodextrine pure substituée par une chaîne éthylénique.

L'obtention de fonctions sulfoxydes et sulfones est ensuite réalisée par traitement avec les agents chimiques oxydants connus pour créer ces types de fonctions à partir du groupement thioéther et qui sont choisis par exemple parmi les suivants : le chlorure d'iodobenzène, le métaperiodate de sodium, le tertio-butyl-oxychlorure, les peracides, l'eau oxygénée et le permanganate de potassium.

L'utilisation de dérivés de cyclodextrines purifiées permet d'obtenir des supports de structure chimique parfaitement définie.

La synthèse est illustrée par le schéma suivant :

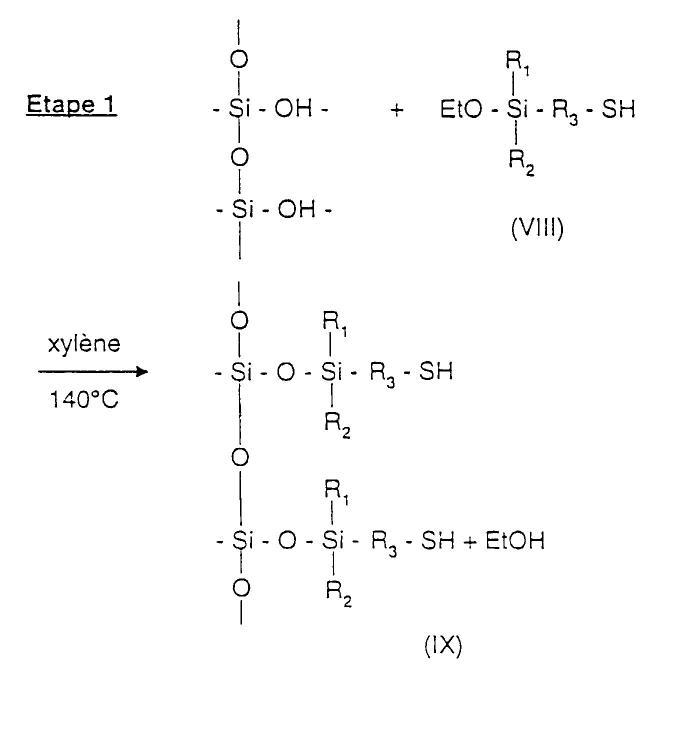

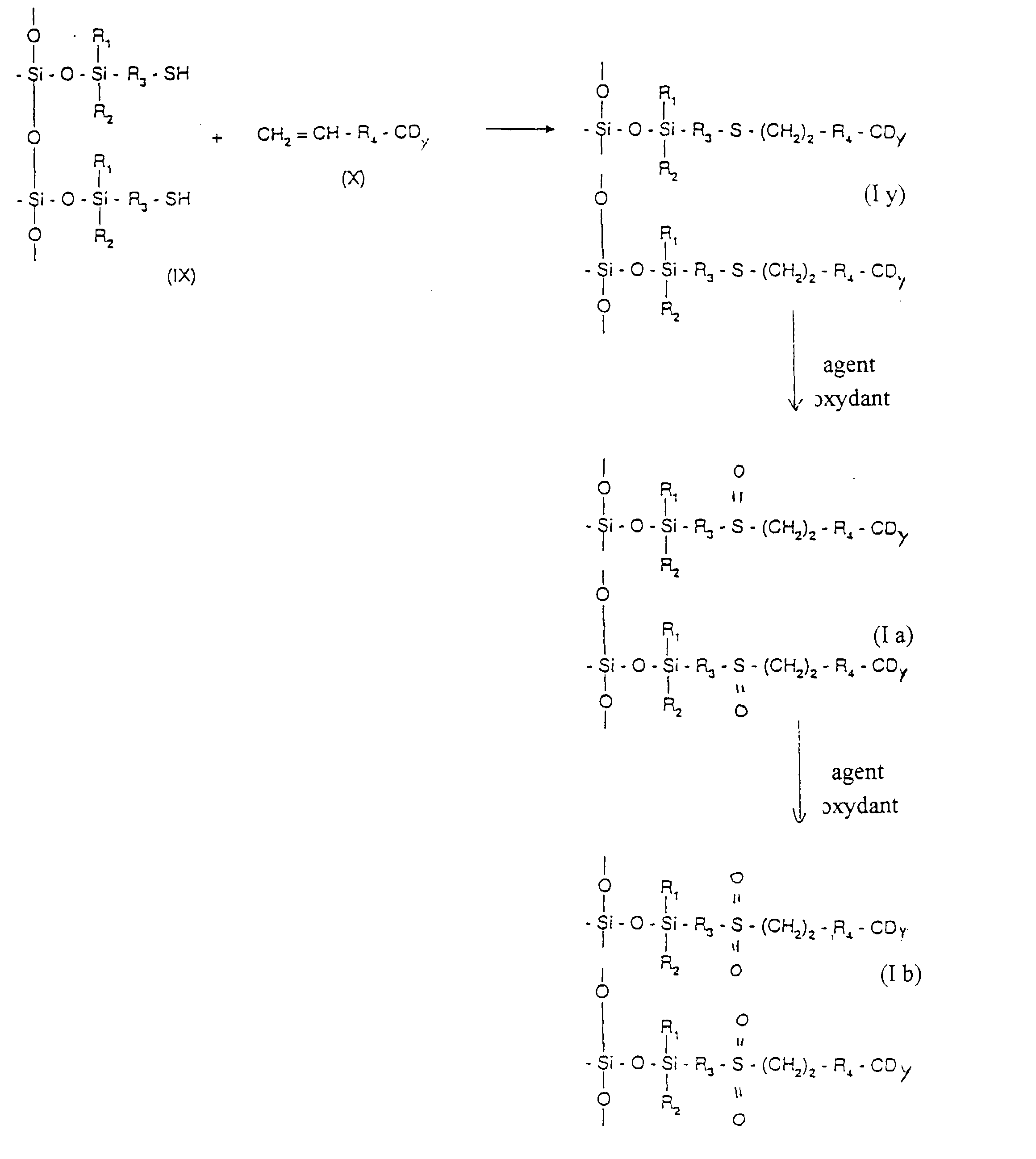

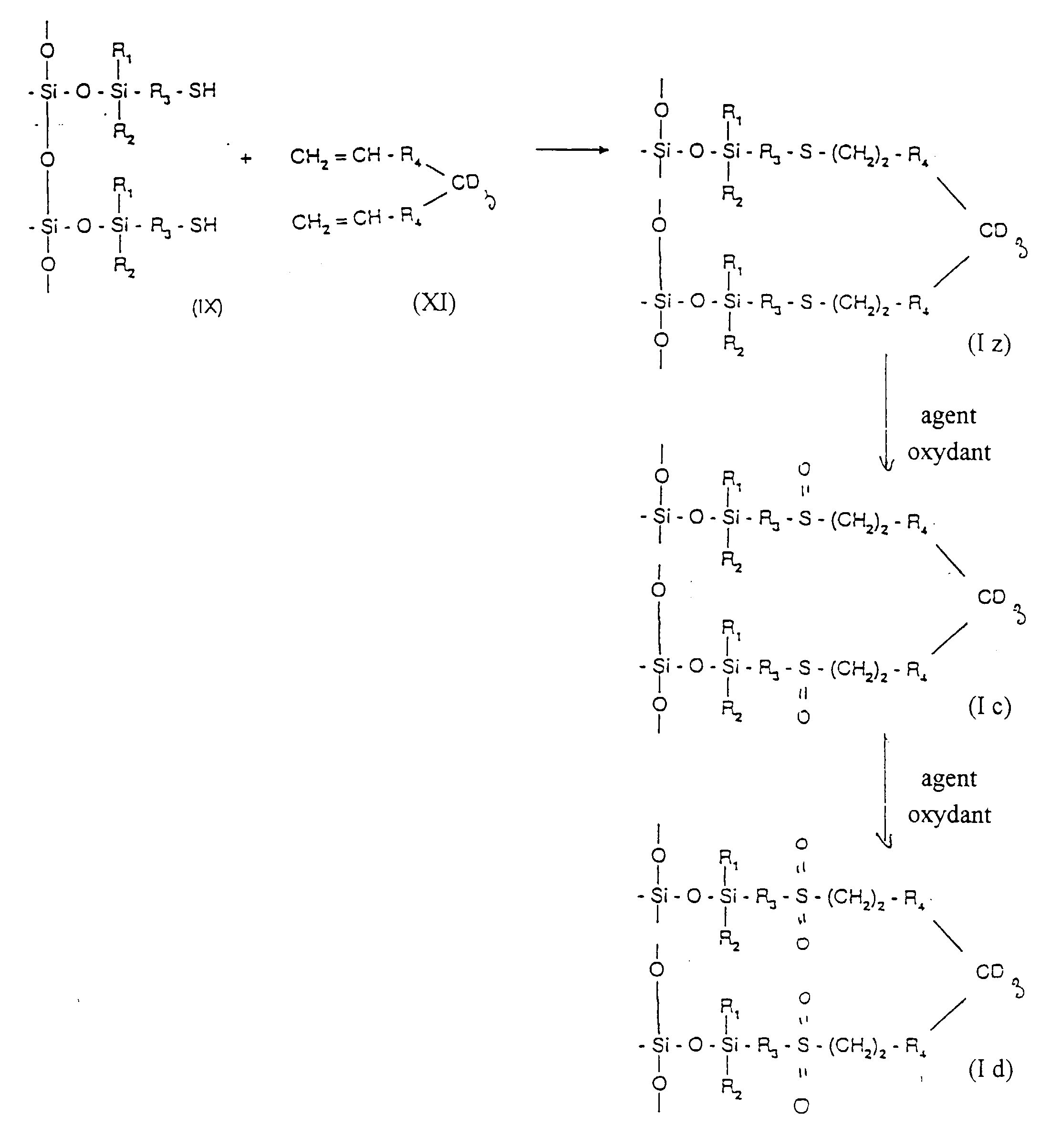

Dans les composés de formules (X) et (XI), R₄ a la même signification que dans les formules (I y), (I a), (I b), (I z), (I c), (I d). CD_{y} a la même signification que dans les formules (I y), (I a) ou (I b), c'est-à-dire représente l'une quelconque des formules (IIy), (IIIy), (IVy) pour les cyclodextrines natives, (V_{y}), (VI_{y}), (VII_{y}) pour les cyclodextrines modifiées.

CD_{z} a la même signification que dans les formules (I z), (I c) ou (I d), c'est-à-dire représente l'une quelconque des formules (II_{z}), (III_{z}), (IV_{z}) et (II_{zz}), (III_{zz}), (IV_{zz}) pour les cyclodextrines natives, (V_{zz}), (VI_{zz}), (VII_{zz}) et (V_{zz}), (VI_{zz}), (VII_{zz}) pour les cyclodextrines modifiées.

Les composés de formule (X) peuvent être représentés par les formules (X a) à (X f) qui suivent. 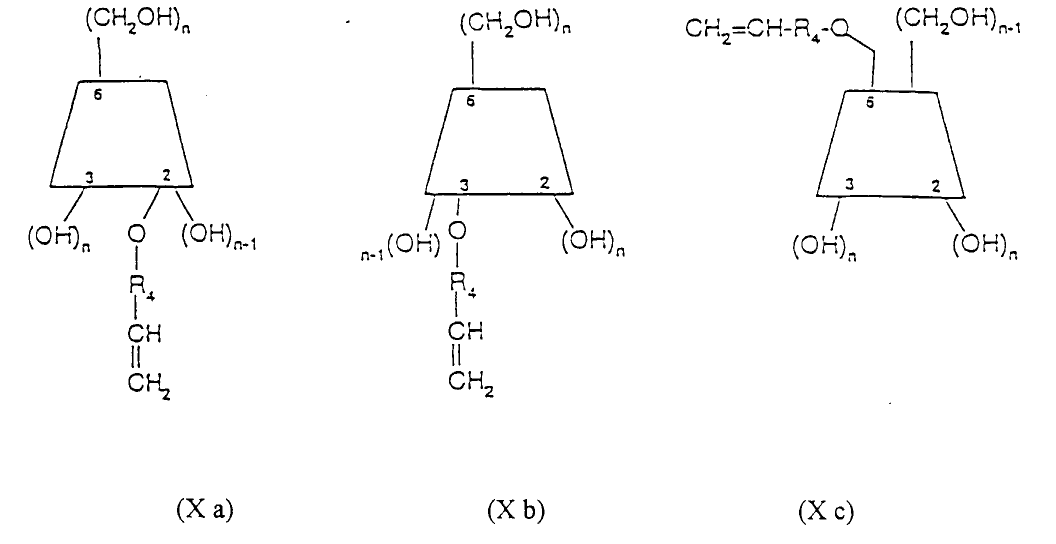 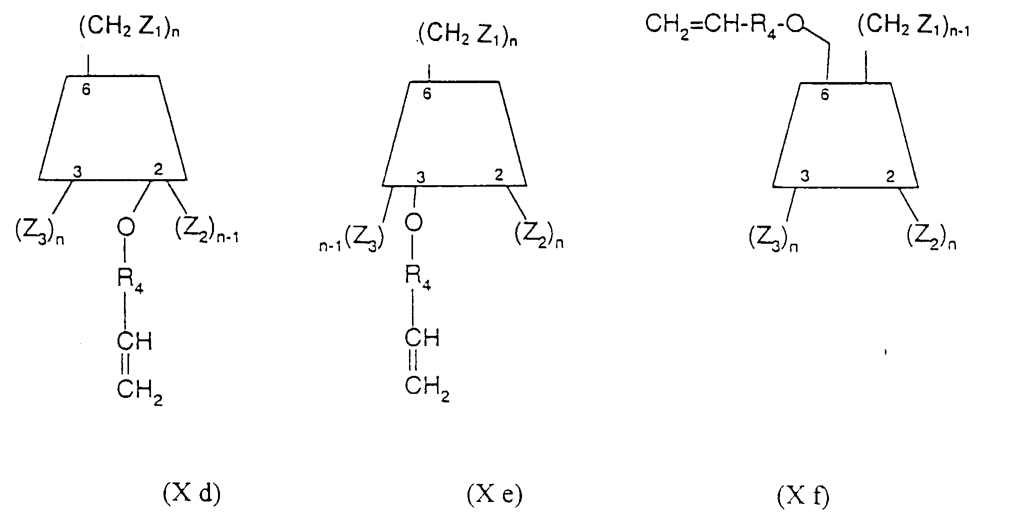 dans lesquelles n = 6 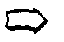 α:-cyclodextrine ; n = 7 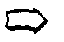 β-cyclodextrine ; ou n = 8 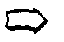 γ-cyclodextrine,

Les composés de formule (XI) peuvent être représentés par les formules (XI a) à (XI 1) qui suivent. 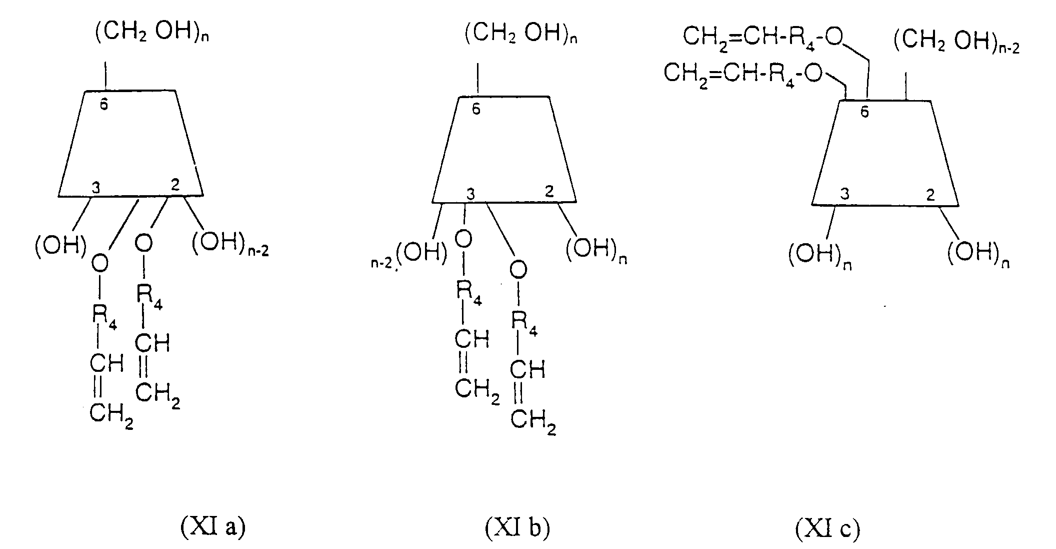 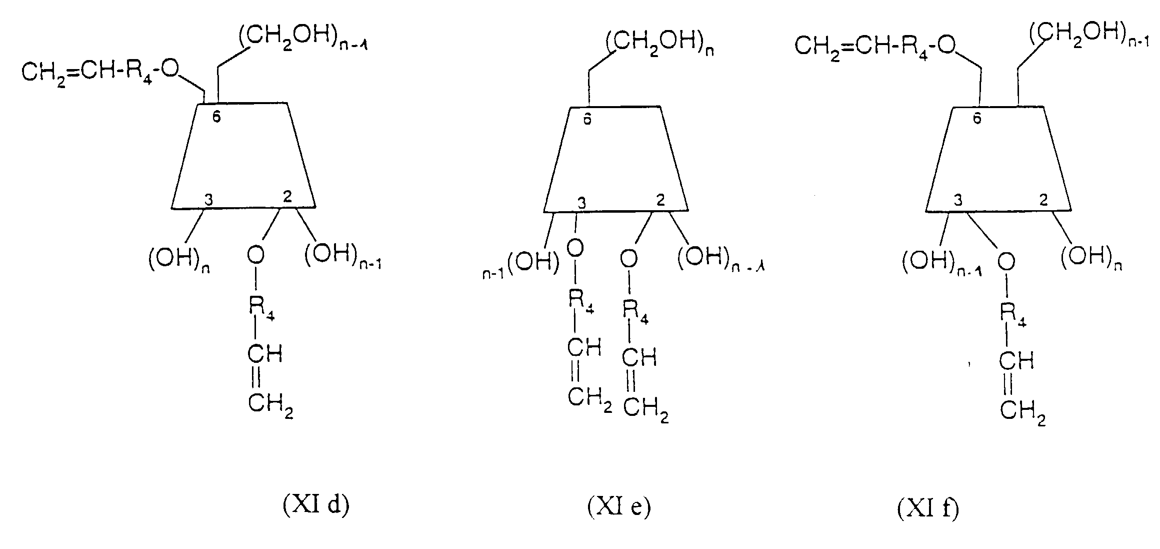 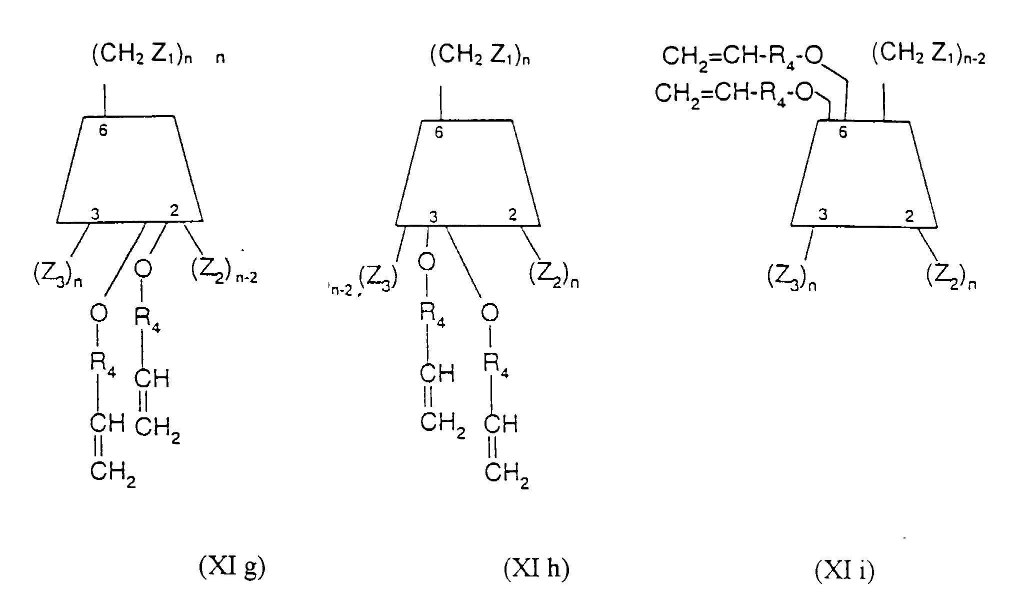 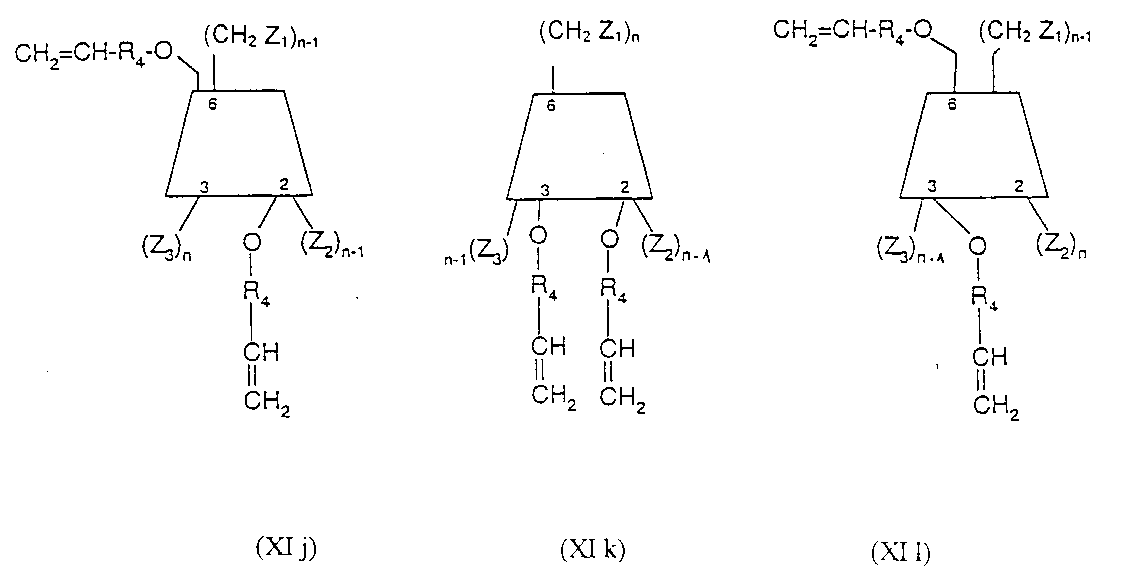 dans lesquelles n = 6 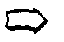 α-cyclodextrine ; n = 7 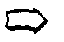 β-cyclodextrine ; ou n = 8 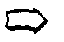 γ-cyclodextrine,

L'invention concerne également les polymères obtenus à partir des composés monomères de formules (X a) à (X f) et (XI a) à (XI I), de formules générales : 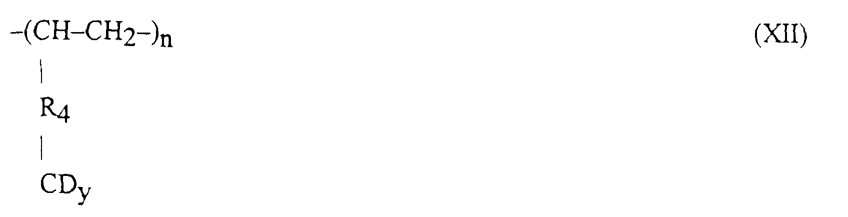 obtenu par homopolymérisation de

CH₂ = CH-R₄-CD_{y} (X)

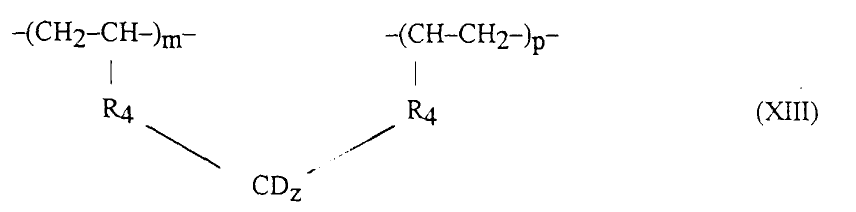

obtenu par homopolymérisation de 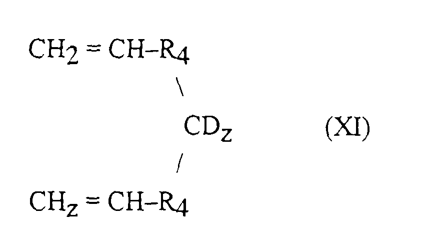 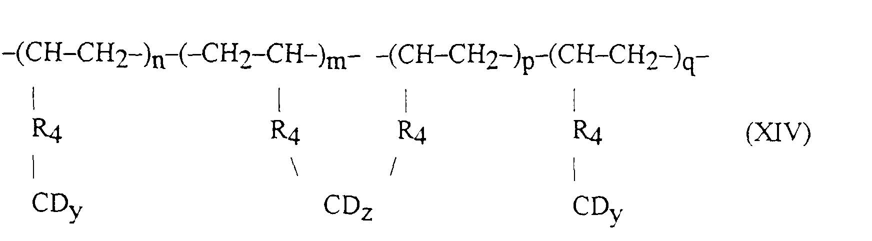 obtenu par copolymérisation de

CH₂ = CH-R₄-CD_{y} (X)

et de 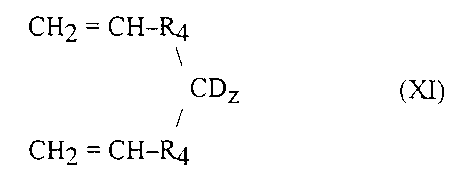 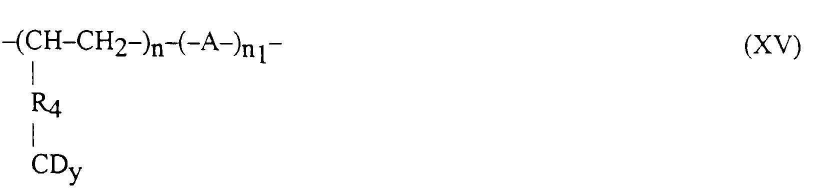 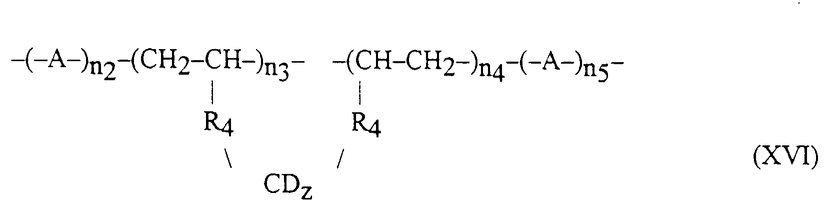 ou

-(A-CH₂-CH₂-R₄-CD_{z}-R₄-CH₂-CH₂)_{n'5}-

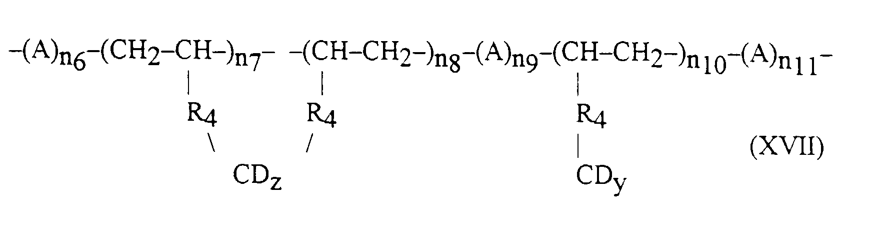

avec n, n₁, n₂, n₃, n₄, n₅, n'_{5,} n₆, n₇, n₉, n₉, n₁₀, n₁₁, m et p, compris entre 1 et 100 000.
avec A de type 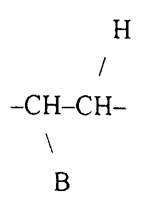 et où B représente un groupement aryle ou polyaryle de 5 à 30 atomes de carbone, éventuellement substitué par des hétéroatomes, ou un groupement alkyle de 2 à 30 atomes de carbone, éventuellement substitué par des hétéroatomes ou un atome d'halogène ;
ou avec A de type

-X-L-X-

où X représente
- un atome de soufre (fonction thioéther),ou une fonction sulfoxyde ou une fonction sulfone ;
- L représente (CH₂)ₙ ou un groupement alkyle, alkyle substitué par des fonctions alcools ou acides ou un groupement aryle éventuellement substitué par un hétéroatome ;
   ou avec A de type 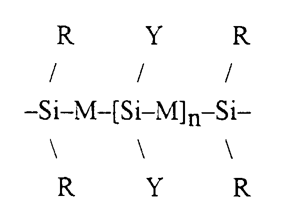 où
   R représente un groupement alkyle ou aryle contenant de 1 à 4 atomes de carbone, ou l'hydrogène ou un mélange des deux,
   M représente (CH₂)ₘ ou l'oxygène, avec m variant de 0 à 10,
   Y représente -O-Si(R)₃, -O-Si(R)₂H ou le groupement R
   et avec n variant de 0 à 3 000.

L'invention concerne également les polymères obtenus à partir de monomères (X a) à (X f) et (XI a) à (XI l) et de formule générale (XII), (XIII), (XIV), (XV), (XVI) et (XVII) et liés à un support organique ou minéral par une liaison chimique covalente et dont les formules générales sont les suivantes : 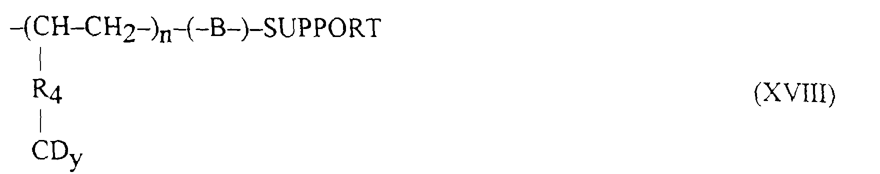 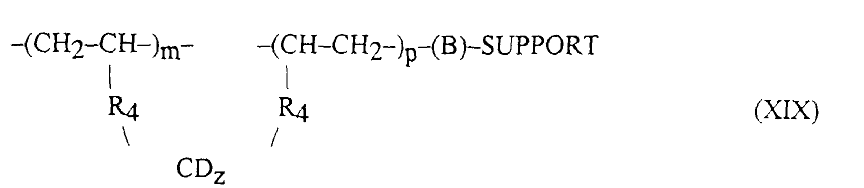 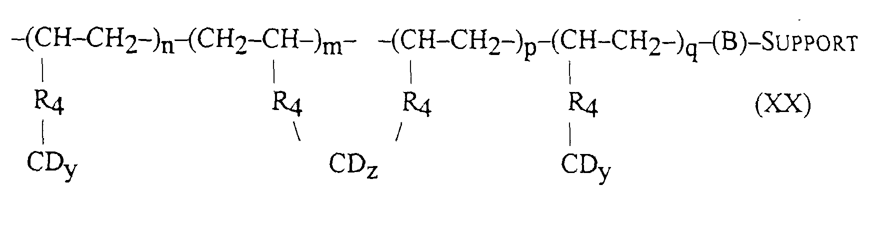 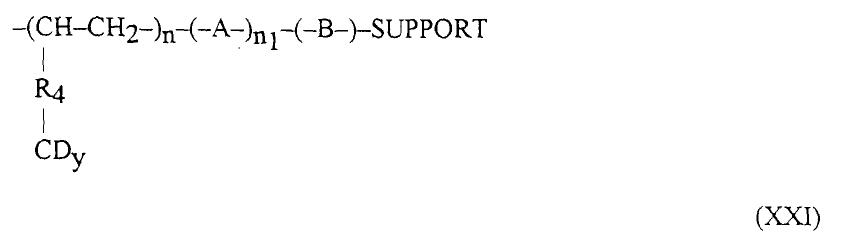 ou 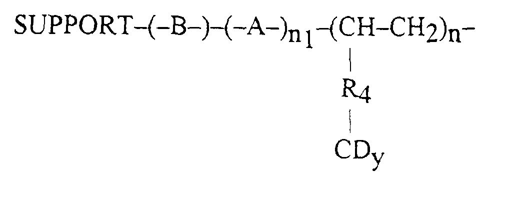 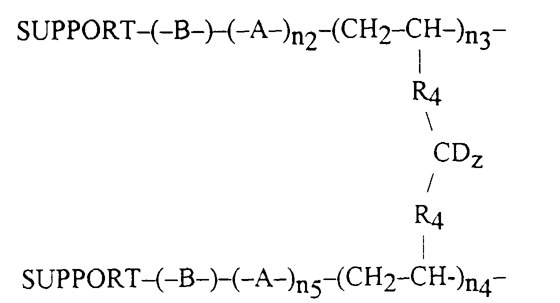 ou 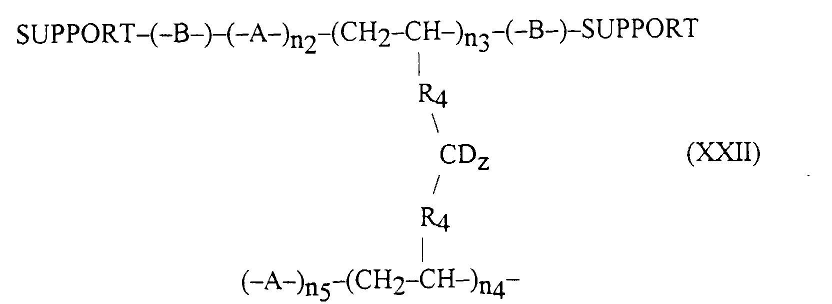 ou

SUPPORT-(-B-)-(-A-)-CH₂-CH₂-R₄-CD_{z}-R₄-CH₂-CH₂-)_{n'5}-

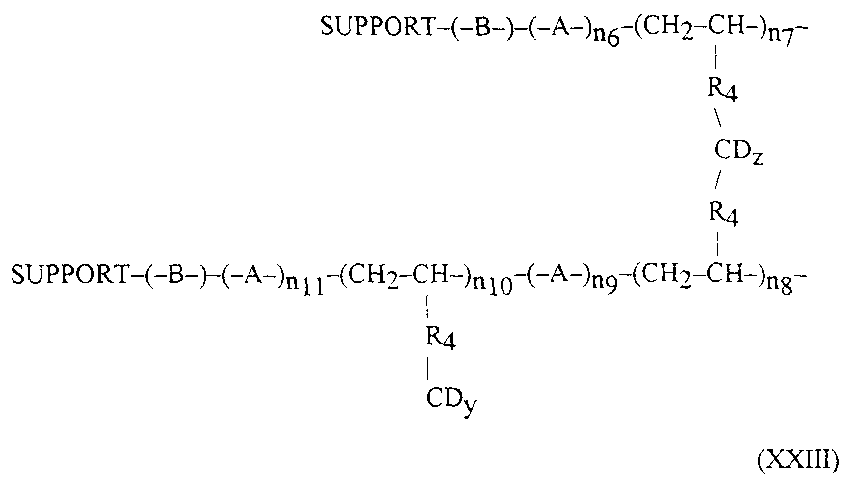

ou 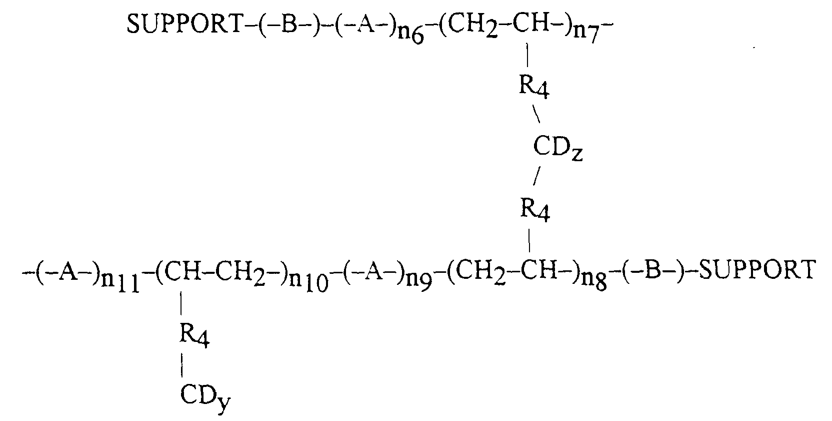 dans lesquelles
- "SUPPORT" représente un support organique ou minéral fonctionnalisé par un alcène ou un hydrogénosilane ou un sulfhydryle,
- B représente une liaison simple, un siloxane ou polysiloxane ou un silane ou polysilane ou un groupement éthylène
- et n, n₁, n₂, n₃, n₄, n₅, n'₅, n₆, n₇, n₈, n₉, n₁₀, n₁₁, m et p, compris entre 1 et 100 000.

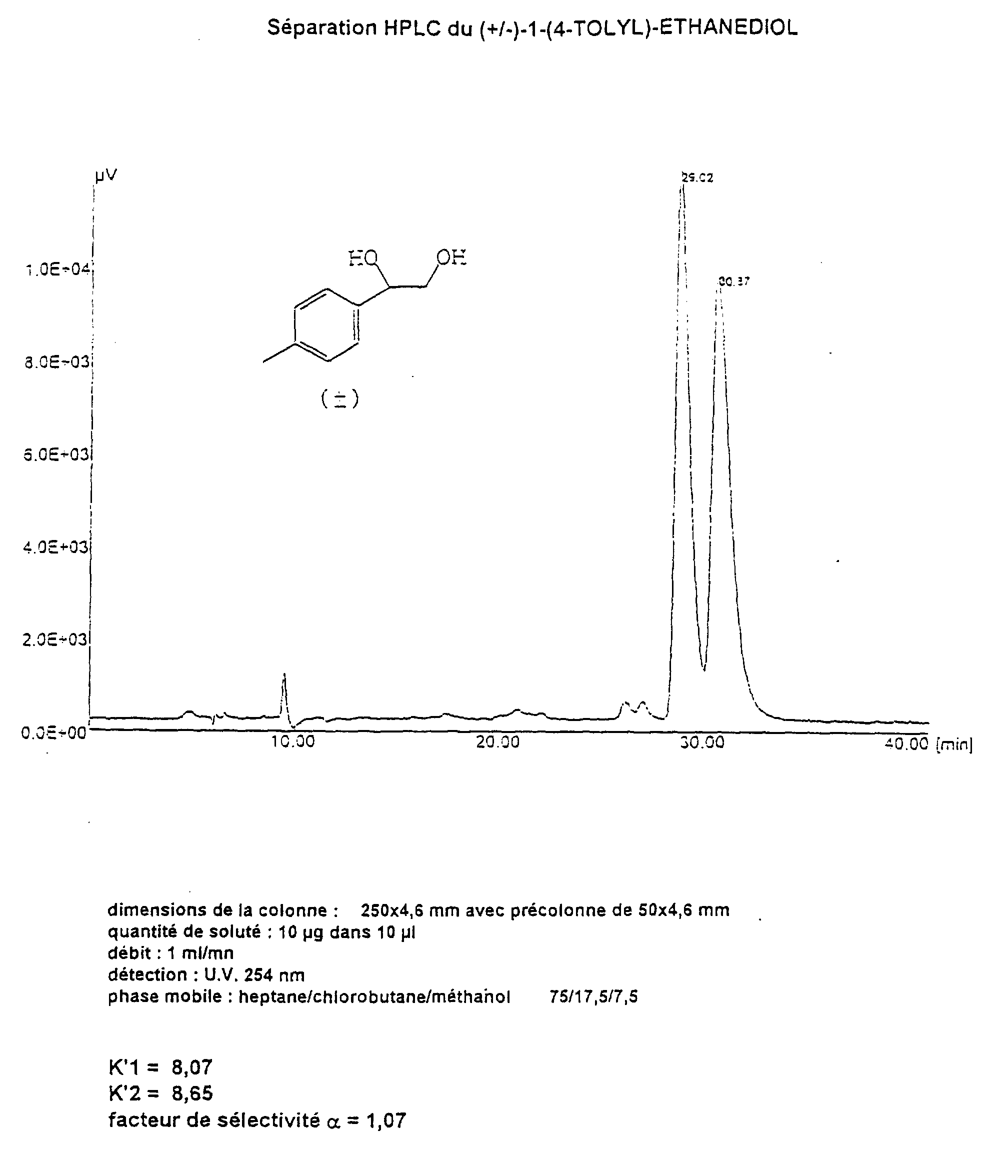

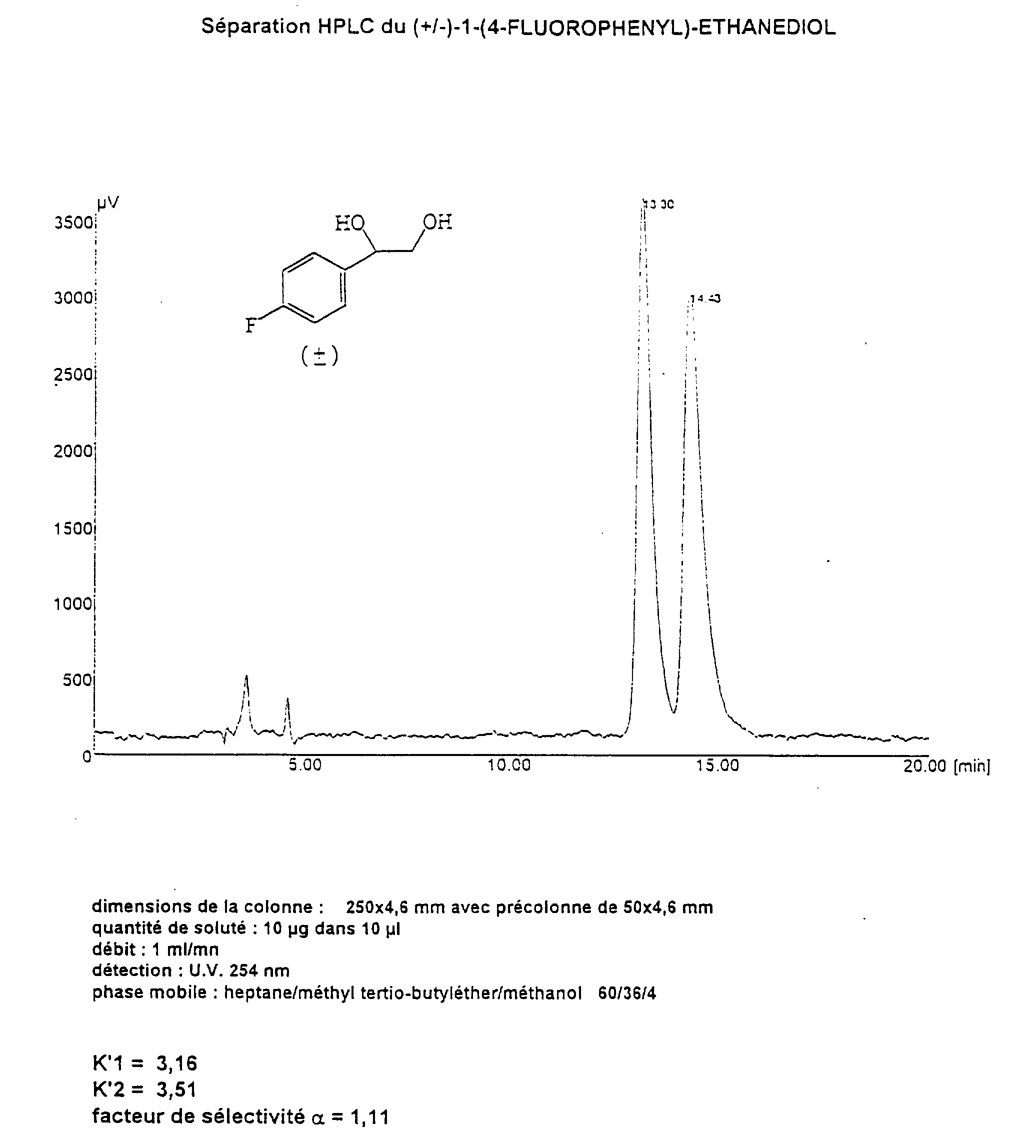

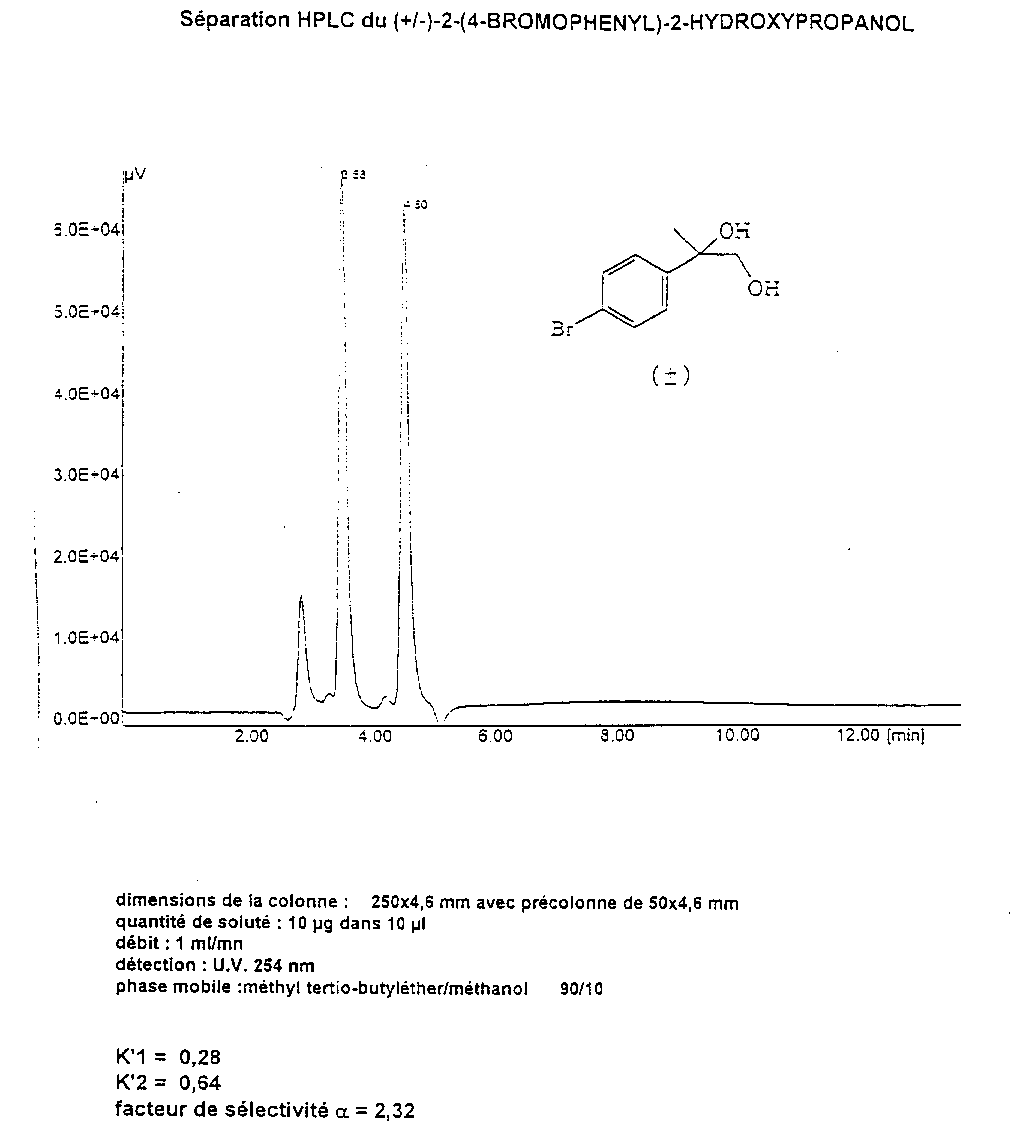

## Revendications

1. A titre de produits nouveaux, les dérivés disubstitués de cyclodextrines natives répondant aux formules générales (XI a), (XI b), (XI c), (XI d), (XI e) et (XI f) de la description, dans lesquelles R4 représente un groupement alkyle de C₁ à C₂₀, ou aryle, éventuellement substitué par un groupement alkyle de C₁ à C₂₀, et n est 6, 7 ou 8.

2. Méthode de synthèse d'un dérivé monosubstitué de cyclodextrine native de formule générale (X) :
CH₂ = CH-R₄-CD_{y}
dans laquelle R4 représente un groupement alkyle de C₁ à C₂₀, ou aryle, éventuellement substitué par un groupement alkyle de C₁ à C₂₀, et CD_{y} représente le reste monovalent (II_{y}), (III_{y}) ou (IV_{y}) de ladite cyclodextrine native,
ou d'un dérivé disubstitué de cyclodextrine native de formule générale (XI) : 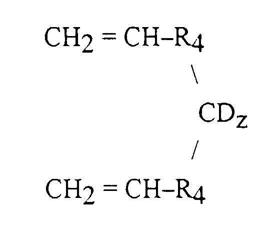 dans laquelle R4 représente un groupement alkyle de C₁ à C₂₀, ou aryle, éventuellement substitué par un groupement alkyle de C₁ à C₂₀, et CD_{z} représente le reste divalent (II_{z}), (III_{z}), (IV_{z}), (II_{z}), (III_{zz}) ou (IV_{zz}) de ladite cyclodextrine native,
caractérisée en ce que l'on soumet une cyclodextrine native de formule générale : 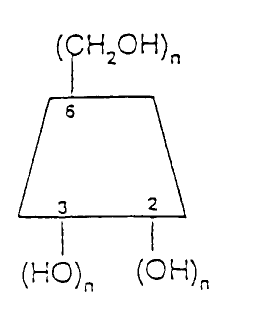 à une réaction avec un composé de formule générale T-R₄-CH=CH₂, dans laquelle R4 a la même signification que ci-dessus et T représente un atome d'halogène, un radical tosyle ou mésyle, ledit composé T-R₄-CH=CH₂ étant utilisé en une proportion de 1 à 24 moles par mole de cyclodextrine native.

3. A titre de produits nouveaux, les dérivés disubstitués de cyclodextrines modifiées répondant aux formules générales (XI g), (XI h), (XI i), (XI j), (XI k) et (XI l), dans lesquelles R4 représente un groupement alkyle de C₁ à C₂₀, ou aryle, éventuellement substitué par un groupement alkyle de C₁ à C₂₀,
Z₁ représente -Y₁W₁
Z₂ représente -Y₂W₂
Z₃ représente -Y₃W₃ et
Y₁, Y₂ et Y₃, identiques ou différents, représentent un atome d'oxygène, de soufre, un groupement amino, ou un groupement sulfoxyde ou sulfone ;
W₁, W₂, W₃, identiques ou différents, représentent :
- un groupement A₂-A₁-A-, dans lequel :
A représente -CO- ou -CS-,
A₁ représente une liaison ou un groupement amino,
A₂ représente un groupement alkyle (C₁-C₂₄) linéaire ou ramifié, éventuellement substitué par un groupement aryle ou un groupement aryle, lui-même éventuellement substitué par un groupement alkyle (C₁-C₂₄) linéaire ou ramifié, étant entendu que les groupements aryles peuvent également être substitués par un ou plusieurs, identiques ou différents, atome(s) d'halogène, ou groupement(s) alkyle(s) (C₁-C₆) linéaire(s) ou ramifié(s), hydroxy, trihalogénoalkyle (C₁-C₆) linéaire(s) ou ramifié(s),
- un groupement alkyle (C₁-C₂₄) linéaire ou ramifié, en particulier méthyle, éthyle ou hydroxypropyle,
- un groupement cycloalkyle (C₃-C₈),
- un groupement hétérocyclique,
- ou un groupement osidique ou polyosidique, en particulier glucosyle diglycosyle, thioglycosyle ou maltosyle ;
ou Z₁, Z₂ et Z₃ représentent chacun une fonction aldéhyde, une fonction acide ou ester carboxylique, une fonction sulfinamide ou sulfimide, une fonction hydroxyle, une fonction acide sulfonique, une fonction sulfate de sodium, de potassium ou d'ammonium, une fonction éthyl- propyl- ou butylsulfonique, une fonction acide phosphorique ou une fonction phosphate de sodium, de lithium, de potassium ou d'ammonium ;
ou Z₁ et Z₃ représentent ensemble une fonction 3,6 anhydro ;
ou Z₂ et Z₃ représentent ensemble une fonction 2,3 anhydro ;
et n est 6, 7 ou 8.

4. Méthode de synthèse d'un dérivé monosubstitué de cyclodextrine modifiée de formule générale (X) :
CH₂ = CH-R₄-CD_{y}
dans laquelle R4 représente un groupement alkyle de C₁ à C₂₀, ou aryle, éventuellement substitué par un groupement alkyle de C₁ à C₂0, et CD_{y} représente le reste monovalent (V_{y}), (VI_{y}) ou (VII_{y}) de ladite cyclodextrine modifiée,
ou d'un dérivé disubstitué de cyclodextrine modifiée de formule générale (XI) : 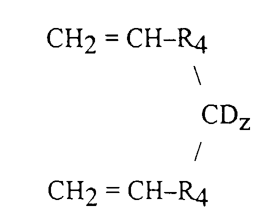 dans laquelle R4 représente un groupement alkyle de C₁ à C₂₀, ou aryle, éventuellement substitué par un groupement alkyle de C₁ à C₂₀ ;
CD_{z} représente le reste divalent (V_{z}), (VI_{z}), (VII_{z}), (V_{zz}), (VI_{zz}) ou (VII_{zz}) de ladite cyclodextrine modifiée, et où
Z₁ représente -Y₁W₁
Z₂ représente -Y₂W₂
Z₃ représente -Y₃W₃ et
Y₁, Y₂ et Y₃, identiques ou différents, représentent un atome d'oxygène, de soufre, un groupement amino, ou un groupement sulfoxyde ou sulfone ;
W₁, W₂, W₃, identiques ou différents, représentent :
- un groupement A₂-A₁-A-, dans lequel :
A représente -CO- ou -CS-,
A₁ représente une liaison ou un groupement amino,
A₂ représente un groupement alkyle (C₁-C₂₄) linéaire ou ramifié, éventuellement substitué par un groupement aryle ou un groupement aryle, lui-même éventuellement substitué par un groupement alkyle (C₁-C₂₄) linéaire ou ramifié, étant entendu que les groupements aryles peuvent également être substitués par un ou plusieurs, identiques ou différents, atome(s) d'halogène, ou groupement(s) alkyle(s) (C₁-C₆) linéaire(s) ou ramifié(s), hydroxy, trihalogénoalkyle (C₁-C₆) linéaire(s) ou ramifié(s),
- un groupement alkyle (C₁-C₂₄) linéaire ou ramifié, en particulier méthyle, éthyle ou hydroxypropyle,
- un groupement cycloalkyle (C₃-C₈),
- un groupement hétérocyclique,
- ou un groupement osidique ou polyosidique, en particulier glucosyle diglycosyle, thioglycosyle ou maltosyle ;
ou Z₁, Z₂ et Z₃ représentent chacun une fonction aldéhyde, une fonction acide ou ester carboxylique, une fonction sulfinamide ou sulfimide, une fonction hydroxyle, une fonction acide sulfonique, une fonction sulfate de sodium, de potassium ou d'ammonium, une fonction éthyl- propyl- ou butylsulfonique, une fonction acide phosphorique ou une fonction phosphate de sodium, de lithium, de potassium ou d'ammonium ;
ou Z₁ et Z₃ représentent ensemble une fonction 3,6 anhydro ;
ou Z₂ et Z₃ représentent ensemble une fonction 2,3 anhydro ;
et n est 6, 7 ou 8 ;
caractérisée en ce que l'on soumet une cyclodextrine modifiée de formule générale : 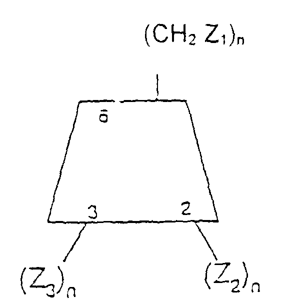 à une réaction avec un composé de formule générale T-R₄-CH=CH₂, dans laquelle R₄ a la même signification que ci-dessus et T représente un atome d'halogène, un radical tosyle ou mésyle, ledit composé T-R₄-CH=CH₂ étant utilisé en une proportion de 1 à 24 moles par mole de cyclodextrine modifiée.

5. Support de silice greffé par une cyclodextrine native ou modifiée monosubstituée, liée audit support par un bras comportant chacun une fonction thioéther, ledit support greffé répondant à la formule générale (Iy) dans laquelle :
R₁ et R₂, identiques ou différents, représentent un atome d'halogène ou un groupement alkyle de C₁ à C₆, linéaire ou ramifié, alkoxy de C₁ à C₆, linéaire ou ramifié, hydroxy, aryle, éventuellement substitué par un ou plusieurs, identiques ou différents, atomes d'halogène ou groupements alkyles, alkoxy, hydroxy ou trihalogénoalkyle,
R₃ et R₄, identiques ou différents, représentent un groupement alkyle de C₁ à C₂₀, ou aryle, éventuellement substitué par un groupement alkyle de C₁ à C₂₀,
CD_{y} représente :
- une cyclodextrine native de formule (II_{y}), (III_{y}) ou (IV_{y}) dans laquelle n est 6,7 ou 8
- ou une cyclodextrine modifiée de formule (V_{y}), (VII_{y}) ou (VII_{y}), dans laquelle :
Z₁ représente -Y₁W₁
Z₂ représente -Y₂W₂
Z₃ représente -Y₃W₃ et
Y₁, Y₂ et Y₃, identiques ou différents, représentent un atome d'oxygène, de soufre, un groupement amino, ou un groupement sulfoxyde ou sulfone ;
W₁, W₂, W₃, identiques ou différents, représentent :
- un groupement A₂-A₁-A-, dans lequel :
A représente -CO- ou -CS-,
A₁ représente une liaison ou un groupement amino,
A₂ représente un groupement alkyle (C₁-C₂₄) linéaire ou ramifié, éventuellement substitué par un groupement aryle ou un groupement aryle, lui-même éventuellement substitué par un groupement alkyle (C₁-C₂₄) linéaire ou ramifié, étant entendu que les groupements aryles peuvent également être substitués par un ou plusieurs, identiques ou différents, atome(s) d'halogène, ou groupement(s) alkyle(s) (C₁-C₆) linéaire(s) ou ramifié(s), hydroxy, trihalogénoalkyle (C₁-C₆) linéaire(s) ou ramifié(s),
- un groupement alkyle (C₁-C₂₄) linéaire ou ramifié, en particulier méthyle, éthyle ou hydroxypropyle,
- un groupement cycloalkyle (C₃-C₈),
- un groupement hétérocyclique,
- ou un groupement osidique ou polyosidique, en particulier glucosyle diglycosyle, thioglycosyle ou maltosyle ;
ou Z₁, Z₂ et Z₃ représentent chacun une fonction aldéhyde, une fonction acide ou ester carboxylique, une fonction sulfinamide ou sulfimide, une fonction hydroxyle, une fonction acide sulfonique, une fonction sulfate de sodium, de potassium ou d'ammonium, une fonction éthyl- propyl- ou butylsulfonique, une fonction acide phosphorique ou une fonction phosphate de sodium, de lithium, de potassium ou d'ammonium ;
ou Z₁ et Z₃ représentent ensemble une fonction 3,6 anhydro ;
ou Z₂ et Z₃ représentent ensemble une fonction 2,3 anhydro ;
et n est 6, 7 ou 8.

6. Support de silice greffé par une cyclodextrine native ou modifiée disubstituée, liée audit support par deux bras comportant chacun une fonction thioéther, ledit support greffé répondant à la formule générale (Iz) dans laquelle :
R₁ et R₂, identiques ou différents, représentent un atome d'halogène ou un groupement alkyle de C₁ à C₆, linéaire ou ramifié, alkoxy de C₁ à C₆, linéaire ou ramifié, hydroxy, aryle, éventuellement substitué par un ou plusieurs, identiques ou différents, atomes d'halogène ou groupements alkyles, alkoxy, hydroxy ou trihalogénoalkyle,
R₃ et R₄, identiques ou différents, représentent un groupement alkyle de C₁ à C₂₀, ou aryle, éventuellement substitué par un groupement alkyle de C₁ à C₂₀,
CD_{z} représente le reste divalent (II_{z}), (III_{z}), (IV_{z}), (II_{zz}), (III_{zz}) ou (IV_{zz}) de ladite cyclodextrine native disubstituée ou le reste divalent (V_{z}), (VI_{z}), (VII_{z}), (V_{zz}), (VI_{zz}) ou (VII_{zz}) de ladite cyclodextrine modifiée disubstituée.

7. Méthode de préparation d'un support greffé selon la revendication 5, caractérisée en ce qu'elle comprend :
- une première étape, dans laquelle on forme une silice-thiol par réaction d'un support de silice avec au moins un mercapto-trialkoxy-silane
- et une seconde étape, dans laquelle on effectue la réaction de ladite silice-thiol avec une cyclodextrine native ou modifiée mono substituée de formule générale (X) :
CH₂ = CH-R₄-CD_{y}
dans laquelle R4 représente un groupement alkyle de C₁ à C₂₀, ou aryle, éventuellement substitué par un groupement alkyle de C₁ à C₂₀ et CD_{y} représente le reste monovalent (II_{y}), (III_{y}) ou (IV_{y}) de ladite cyclodextrine native ou le reste monovalent (V_{y}), (VI_{y}) ou (VII_{y}) de ladite cyclodextrine modifiée.

8. Méthode de préparation d'un support greffé selon la revendication 6, caractérisée en ce qu'elle comprend :
- une première étape, dans laquelle on forme une silice-thiol par réaction d'un support de silice avec au moins un mercapto-trialkoxy-silane
- et une seconde étape, dans laquelle on effectue la réaction de ladite silice-thiol avec une cyclodextrine native ou modifiée disubstituée de formulegénérale (XI) : 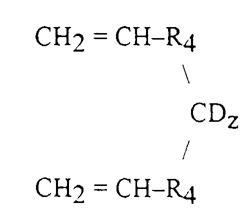 dans laquelle R4 représente un groupement alkyle de C₁ à C₂₀, ou aryle, éventuellement substitué par un groupement alkyle de C₁ à C₂₀, et CD_{z} représente le reste divalent (II_{z}), (III_{z}), (IV_{z}), (II_{zz}), (III_{zz}) ou (IV_{zz}) de ladite cyclodextrine native ou le reste divalent (V_{z}), (VI_{z}), (VII_{z}), (V_{zz}), (VI_{zz}) ou (VII_{zz}) de ladite cyclodextrine modifiée.

9. Support de silice greffé par une cyclodextrine native ou modifiée monosubstituée, liée audit support par un bras comportant une fonction sulfoxyde ou une fonction sulfone, ledit support greffé répondant à la formule générale (I a) ou (I b) dans laquelle ;
R₁ et R₂, identiques ou différents, représentent un atome d'halogène ou un groupement alkyle de C₁ à C₆, linéaire ou ramifié, alkoxy de C₁ à C₆, linéaire ou ramifié, hydroxy, aryle, éventuellement substitué par un ou plusieurs, identiques ou différents, atomes d'halogène ou groupements alkyles, alkoxy, hydroxy ou trihalogénoalkyle,
R₃ et R₄, identiques ou différents, représentent un groupement alkyle de C₁ à C₂₀, ou aryle, éventuellement substitué par un groupement alkyle de C₁ à C₂₀,
et CD_{y} représente le reste monovalent (II_{y}), (III_{y}) ou (IV_{y}) de ladite cyclodextrine native ou le reste monovalent (V_{y}), (VI_{y}) ou (VII_{y}) de ladite cyclodextrine modifiée.

10. Support de silice greffé par une cyclodextrine native ou modifiée disubstituée, liée audit support par deux bras comportant chacun une fonction sulfoxyde où une fonction sulfone, ledit support greffé répondant à la formule générale(I c) ou (I d) dans laquelle :
R₁ et R₂, identiques ou différents, représentent un atome d'halogène ou un groupement alkyle de C₁ à C₆, linéaire ou ramifié, alkoxy de C₁ à C₆, linéaire ou ramifié, hydroxy, aryle, éventuellement substitué par un ou plusieurs, identiques ou différents, atomes d'halogène ou groupements alkyles, alkoxy, hydroxy ou trihalogénoalkyle,
R₃ et R₄, identiques ou différents, représentent un groupement alkyle de C₁ à C₂₀, ou aryle, éventuellement substitué par un groupement alkyle de C₁ à C₂₀,
et CD_{z} représente le reste divalent (II_{z}), (III_{z}), (IV_{z}), (II_{zz}), (III_{zz}) ou (IV_{zz}) de ladite cyclodextrine native ou le reste divalent (V_{z}), (VI_{z}), (VII_{z}), (V_{zz}), (VI_{zz}) ou (VII_{zz}) de ladite cyclodextrine modifiée.

11. Méthode de préparation d'un support greffé selon la revendication 9, caractérisé en ce que l'on soumet un support greffé selon la revendication 5 à une oxydation par un agent oxydant.

12. Méthode de préparation d'un support greffé selon la revendication 10, caractérisé en ce que l'on soumet un support greffé selon la revendication 6 à une oxydation par un agent oxydant.

13. Homopolymère ou copolymère de formule (XIII) ou (XVI) formé entre une cyclodextrine native ou modifiée disubstituée de formule générale (XI) : 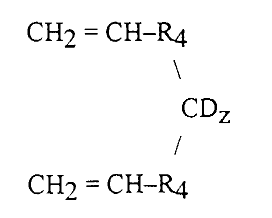 dans laquelle R₄ représente un groupement alkyle de C₁ à C₂₀, ou aryle, éventuellement substitué par un groupement alkyle de C₁ à C₂₀, et CD_{z} représente le reste divalent (II_{z}), (III_{z}), (IV_{z}), (II_{zz}), (III_{zz}) ou (IV_{zz}) de ladite cyclodextrine native ou le reste divalent (V_{z}), (VI_{z}), (VII_{z}), (V_{zz}), (VI_{zz}) ou (VII_{zz}) de ladite cyclodextrine modifiée ;
et au moins un comonomère difonctionnel.

14. Support de formule (XIX) ou (XXII) greffé par au moins un copolymère selon la revendication 13.

15. Homopolymère ou copolymère de formule (XII), (XIV), (XV) ou (XVII) formé d'au moins une cyclodextrine native ou modifiée monosubstituée de formule générale (X) :
CH₂ = CH-R₄-CD_{y}
dans laquelle R₄ représente un groupement alkyle de C₁ à C₂₀, ou aryle, éventuellement substitué par un groupement alkyle de C₁ à C₂₀ et CD_{y} représente le reste monovalent (IIy), (IIIy) ou (IVy) de ladite cyclodextrine native ou le reste monovalent (Vy), (VIy) ou (VIIy) de ladite cyclodextrine modifiée.
et/ou d'au moins une cyclodextrine native ou modifiée disubstituée de formule générale (XI) : 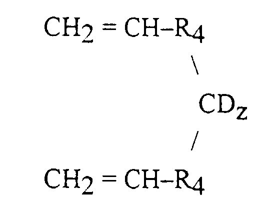 dans laquelle R₄ est défini comme ci-dessus et CD_{z} représente le reste divalent (II_{z}), (III_{z}), (IV_{z}), (II_{zz}), (III_{zz}) ou (IV_{zz}) de ladite cyclodextrine native ou le reste divalent (V_{z}), (VI_{z}), (VII_{z}), (V_{zz}), (VI_{zz}) ou (VII_{zz}) de ladite cyclodextrine modifiée.

16. Support de formule (XVIII), (XX) ou (XXI) greffé par au moins un homopolymère ou au moins un copolymère selon la revendication 15.

17. Utilisation d'un support selon l'une des revendications 5, 6, 9, 10, 14 et 16 en préparation ou séparation d'énantiomères, en synthèse asymétrique, en catalyse, en préparation ou séparation d'isomères géométriques ou d'isomères de position ou en préparation ou séparation de molécules organiques à caractère hydrophobe.
